# EUROPEAN PATENT SPECIFICATION

(11) **EP 2 274 530 B1**
(45) Date of publication and mention of the grant of the patent: **30.05.2012**
(21) Application number: 09720471.3
(22) Date of filing: 16.03.2009
(51) Int. Cl.: F16D 49/08

(54) **ELECTROMAGNETIC BRAKE SYSTEM**
ELEKTROMAGNETISCHES BREMSSYSTEM
SYSTÈME DE FREIN ÉLECTROMAGNÉTIQUE

(30) Priority: 14.03.2008 US 36642
(43) Date of publication of application: 19.01.2011
(73) Proprietor: Lord Corporation, Cary, NC 27511 (US)
(72) Inventor: CARLSON, J., David, Cary NC 27511 (US); GONCALVES, Fernando, D., Raleigh NC 27613 (US)
(74) Representative: Hendry, Niall James
(86) International application number: PCT/US2009/037329
(87) International publication number: WO 2009/114877

(56) References cited:
- EP-A- 0 105 806
- WO-A-2005/095819
- GB-A- 2 020 761
- GB-A- 2 033 027

## Description

### Field of the Invention

The invention relates to the field of brakes. The invention relates to the field of electromagnetic brakes for controlling motion. More particularly the invention relates to the field of electromagnetic brakes for controlling rotation. A brake system having the features recited in the preamble of claim 1 is disclosed in WO2005/095819A.

### Summary of the Invention

In an embodiment the invention includes a brake system for controlling rotation between a first body and a second body. The brake system includes an interior core member, the interior core member coupling with the first body. The brake system includes an outer exterior electromagnetic unlocking member, the outer exterior electromagnetic unlocking member enclosing the interior core member, the outer exterior electromagnetic unlocking member coupling with the second body. The brake system includes a resilient spring brake lock member having a brake torque stiffness, with the resilient spring brake lock member between the interior core member and the outer exterior electromagnetic unlocking member, the resilient spring brake lock member engaging the interior core member wherein the resilient spring brake lock member inhibits rotation between the outer exterior electromagnetic unlocking member and the interior core member, and an attractive electromagnetic field applied by the outer exterior electromagnetic unlocking member disengages the resilient spring brake lock member from engaging the interior core member and provides for rotation between the outer exterior electromagnetic unlocking member and the interior core member.

It is to be understood that both the foregoing general description and the following detailed description are exemplary of the invention, and are intended to provide an overview or framework for understanding the nature and character of the invention as it is claimed. The accompanying drawings are included to provide a further understanding of the invention, and are incorporated in and constitute a part of this specification. The drawings illustrate various embodiments of the invention and together with the description serve to explain the principals and operation of the invention.

### Brief Description of the Drawings

FIG. 1A-B shows an electromagnetic brake locked with no current applied.
FIG 2A-B shows the electromagnetic brake of FIG. 1A-B unlocked and released with a current applied.
FIG. 3A-B shows an electromagnetic brake locked with no current applied.
FIG. 3C shows a resilient spring brake lock member with antirotation anchor members.
FIG. 4 shows an electromagnetic brake locked with no current applied.
FIG. 5 shows an electromagnetic brake locked with no current applied.
FIG. 6A-D illustrate brake engagement and disengagement with electromagnetic field flux lines shown as dotted flux lines with arrows and large arrows in 6B&D illustrating movement direction of the resilient spring brake lock member.
FIG 7A-B shows an electromagnetic brake locked, with the electromagnetic brake electromagnetic unlocking member including permanent magnets, a electromagnetic coil, secondary gap g' nonmagnetic spacer member.
FIG. 8A-D illustrate brake engagement and disengagement with electromagnetic field flux lines shown as dotted flux lines with arrows and large arrows in 8B&D illustrating movement direction of the resilient spring brake lock member.
FIG. 9A shows an electromagnetic brake with axially disposed permanent magnets, with the resilient spring brake lock band locked with no current applied.
FIG. 9B-C shows an electromagnetic brake with a radially disposed permanent ring magnet, with the resilient spring brake lock band locked with no current applied.
FIG. 10 shows an electromagnetic brake.
FIG. 11 shows a cross section view of an embodiment of electromagnetic brake.
FIG. 12 shows a cross section view of an embodiment of electromagnetic brake.
FIG. 13 shows a vehicle machine embodiment of an electromagnetic brake system.
FIG. 14 shows a vehicle machine embodiment of an electromagnetic brake system.
FIG. 15A-B a vehicle machine embodiment of electromagnetic brake system.

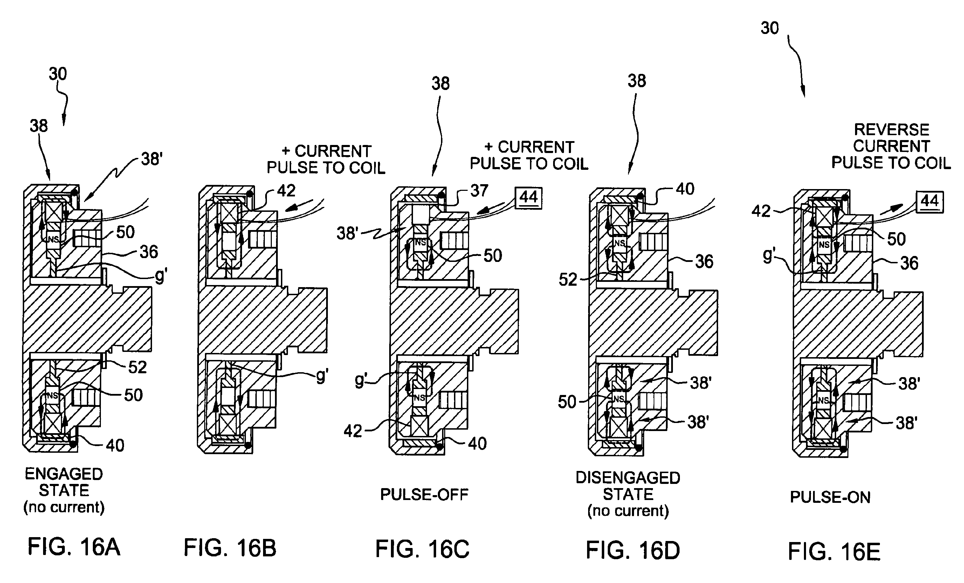

FIG. 16A-E illustrate brake engagement and disengagement with electromagnetic field flux lines shown as arrowed flux lines.

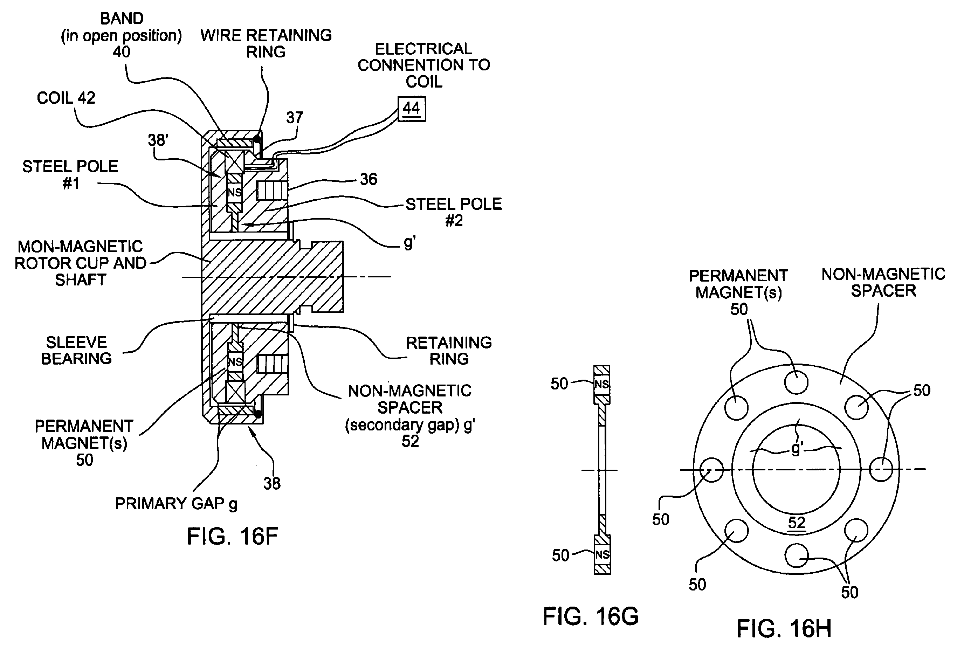

FIG. 16F shows a pulse on/ pulse off electromagnetic brake embodiment with outboard coil and inboard permanent magnets in the interior core member with the resilient spring brake lock band unlocked.
FIG. 16G-H illustrate an inner core electromagnetic unlocking member element with permanent magnets 50 disposed in a nonmagnetic spacer with a secondary gap g'.

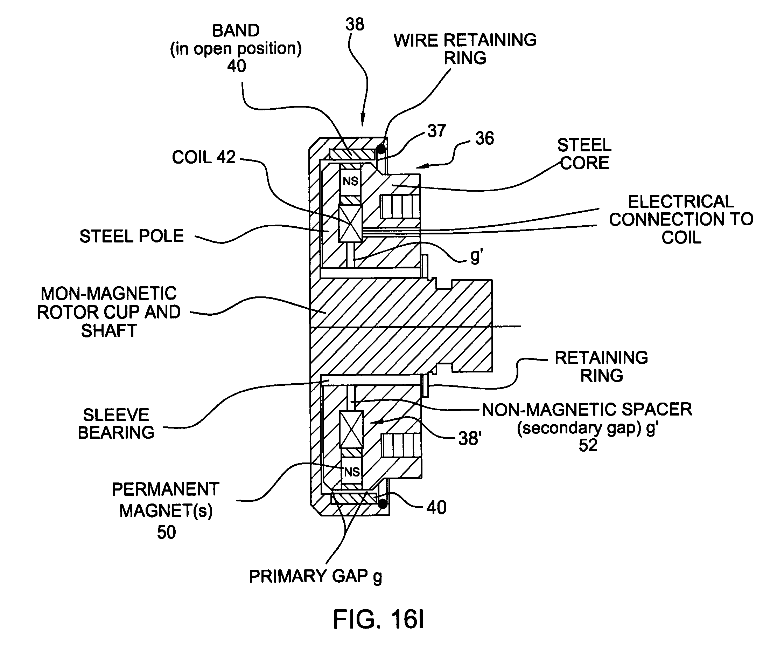

FIG. 16I shows a pulse on/ pulse off electromagnetic brake embodiment with outboard permanent magnets and inboard coil in the interior core member with the resilient spring brake lock band unlocked.
FIG. 17 shows a motor machine electromagnetic brake system.

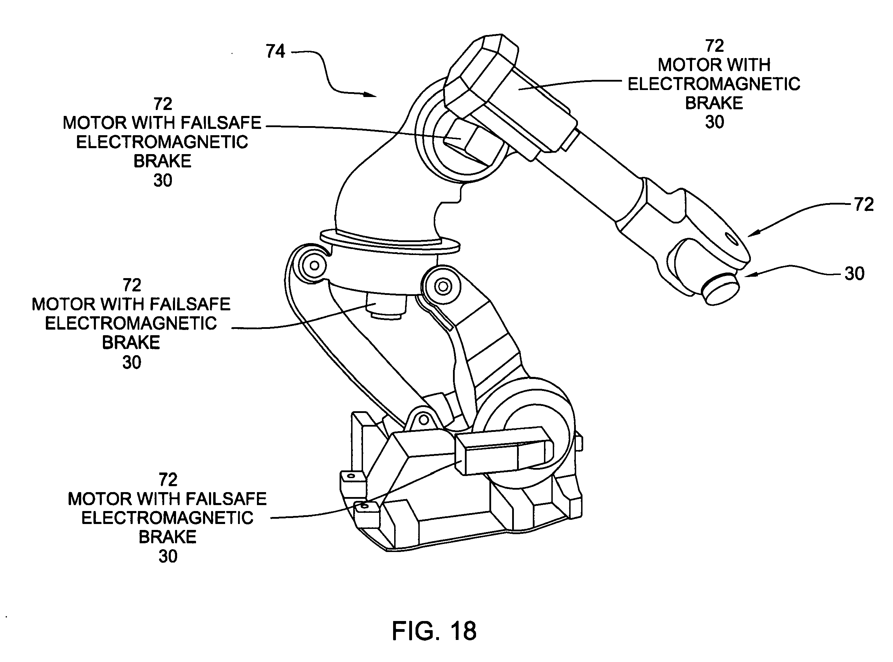

FIG. 18 shows a robotic machine multi-joint robot with the robot arm having motors and failsafe electromagnetic brakes at the robot joints.
FIG. 19 is a plot of T/W (Nm/Kg) vs. Static Torque Rating (Nm).
FIG. 20 is a plot of T/V (Nm/cc) vs. Static Torque Rating (Nm).
FIG. 21 is a plot of T/J(10⁶ s⁻²) vs. Static Torque Rating (Nm).

### Detailed Description of the Preferred Embodiment

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

Reference will now be made in detail to the present preferred embodiments of the invention, examples of which are illustrated in the accompanying drawings.

In an embodiment the invention includes a brake system for controlling rotation between a first body and a second body. The brake system includes an interior core member, the interior core member coupling with the first body. The brake system includes an outer exterior electromagnetic unlocking member, the outer exterior electromagnetic unlocking member enclosing the interior core member, the outer exterior electromagnetic unlocking member coupling with the second body. The brake system includes a resilient spring brake lock member having a brake torque stiffness, with the resilient spring brake lock member between the interior core member and the outer exterior electromagnetic unlocking member, the resilient spring brake lock member engaging the interior core member wherein the resilient spring brake lock member inhibits rotation between the outer exterior electromagnetic unlocking member and the interior core member, and an attractive electromagnetic field applied by the outer exterior electromagnetic unlocking member disengages the resilient spring brake lock member from engaging the interior core member and provides for rotation between the outer exterior electromagnetic unlocking member and the interior core member.

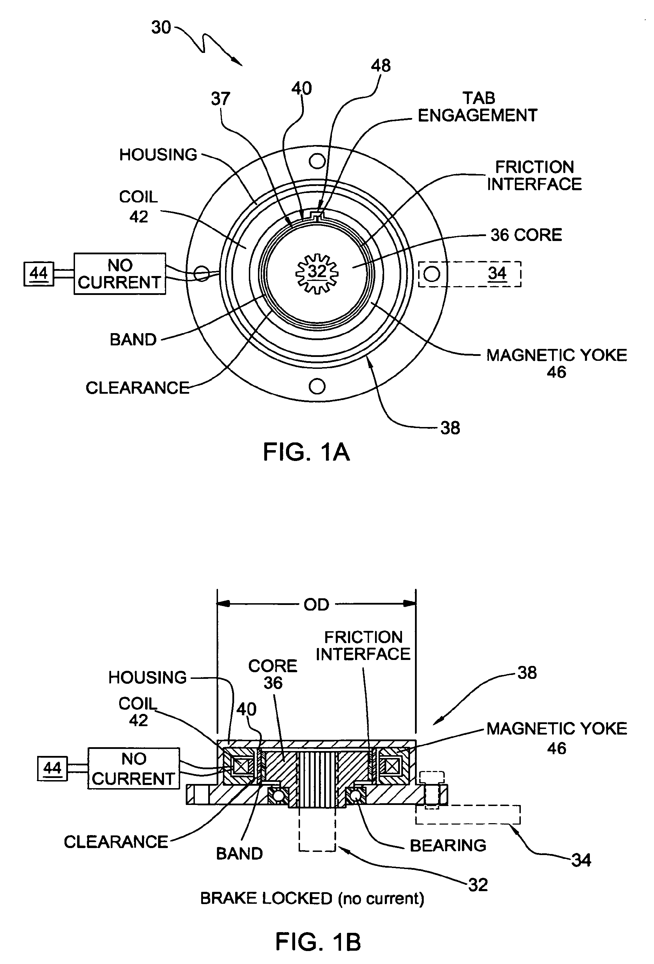

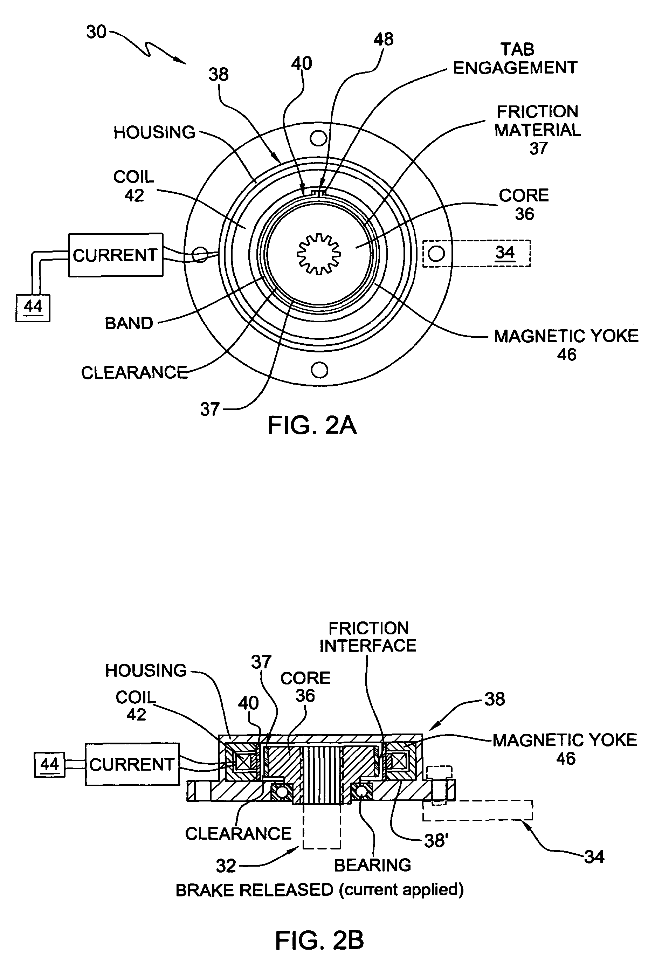

In an embodiment the invention includes a brake system 30 for controlling rotation between a first body 32 and a second body 34. The brake system 30 includes an interior core member 36, the interior core member 36 coupling with the first body 32. The brake system 30 includes an outer exterior electromagnetic unlocking member 38, the outer exterior electromagnetic unlocking member 38 enclosing the interior core member 36, with the outer exterior electromagnetic unlocking member 38 coupling with the second body 34. The outer exterior electromagnetic unlocking member 38 preferably comprises a housing and preferably a wound electromagnetic coil and magnetic poles. The brake system 30 includes a resilient spring brake lock member 40 having a brake torque stiffness, the resilient spring brake lock member 40 between the interior core member 36 and the outer exterior electromagnetic unlocking member 38 , the resilient spring brake lock member 40 engaging the interior core member 36 wherein the resilient spring brake lock member 40 inhibits rotation between the outer exterior electromagnetic unlocking member 38 and the interior core member 36, and an attractive electromagnetic field applied by the outer exterior electromagnetic unlocking member 38 disengages the resilient spring brake lock member 40 from engaging the interior core member 36 and provides for rotation between the outer exterior electromagnetic unlocking member 38 and the interior core member 36. FIG. 1 shows the brake system 30 with no current applied to the outer exterior electromagnetic unlocking member 38 coil and magnetic yoke thus no attractive electromagnetic field applied by the outer exterior electromagnetic unlocking member 38 to disengage the resilient spring brake lock member 40 from engaging the interior core member 36. FIG. 2 shows the brake system 30 with current applied to the outer exterior electromagnetic unlocking member 38 coil and magnetic yoke with the attractive electromagnetic field applied by the outer exterior electromagnetic unlocking member 38 to disengage the resilient spring brake lock member 40 from engaging the interior core member 36.

Preferably the brake system 30 provides an unpowered rotation inhibiting brake force, with the unpowered rotation inhibiting brake force dependent on the brake torque stiffness. Preferably the outer exterior electromagnetic unlocking member 38 includes an electromagnetic coil 42 and the brake system includes a current source 44, the current source 44 supplying a current having a current level and a current direction to the electromagnetic coil 42 to generate the attractive electromagnetic field and wherein the rotation inhibiting brake force is not dependent on the current level. Preferably the outer exterior electromagnetic unlocking member includes a wound coil, magnetic poles and a magnetic pole yoke member.

Preferably the brake system current source 44 also supplies an opposing direction current pulse to the electromagnetic coil 42, the opposing direction current having an opposite current direction, with the electromagnetic coil 42 generating a repelling electromagnetic field to re-engage the resilient spring brake lock member 40 with the interior core member 36, to provide a locked brake, after the brake has been released with current applied.

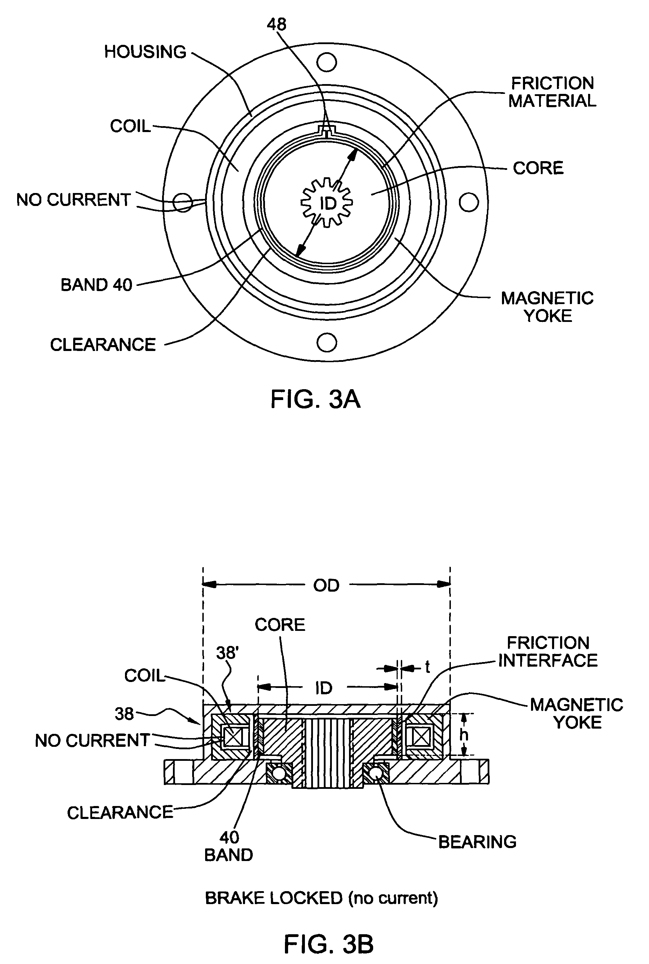

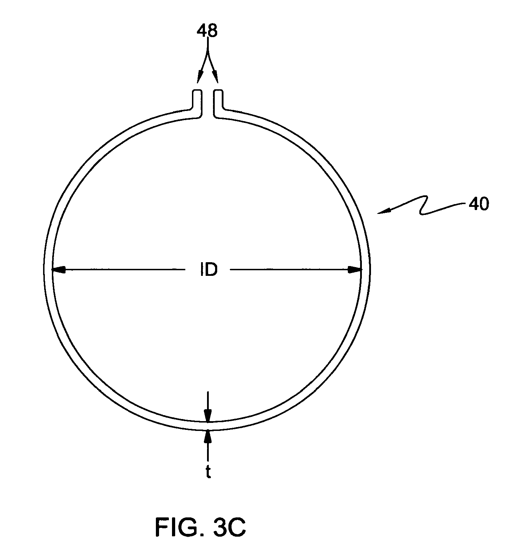

Preferably the resilient spring brake lock member 40 is comprised of a metallic band. As shown in FIG. 3, resilient spring brake lock member 40 is preferably comprised of a metallic circular band, preferably having an engaged ID and an engagement inner circumference, a band height h, and a band thickness t preferably with h>t.

Preferably the resilient spring brake lock member 40 has a magnetic memory. Preferably the resilient spring brake lock member 40 is comprised of a metal, preferably a metal with a magnetic hysteresis. Preferably the resilient spring brake lock member 40 is comprised of steel.

In preferred embodiments the brake system outer exterior electromagnetic unlocking member 38 includes an electromagnetic coil yoke member 46 with a north and south pole, the electromagnetic coil yoke member 46 is comprised of a metal with a magnetic hysteresis. The electromagnetic coil yoke member 46 is preferably comprised of steel. The electromagnetic coil yoke member 46 preferably has a substantial remnant flux density/ magnetic remnance and substantial magnetic coercivity, with the yoke 46 and preferably also the band brake lock member 40 becoming magnetized, with the band brake lock member 40remaining disengaged. Then a reversing opposite current pulse is supplied from the current source 44, with the reversing opposite current pulse through EM coil 42 repelling the magnetized band 40 away from yoke 46. Preferably the reversing opposite current pulse is a short time duration opposing direction current pulse having an opposite current direction then the original current that disengaged the band brake lock member 40 from the core 36 and released the brake 30, with the reversed current pulsed electromagnetic coil 42 generating a repelling electromagnetic field to re-engage the resilient spring brake lock member 40 with the interior core member 36.

In an embodiment the invention includes an electromagnetic brake for controlling rotation between a first body and a second body. The electromagnetic brake includes an interior curved circular core member, the interior core member having an exterior curved surface. The electromagnetic brake includes an exterior member, the exterior member encircling the interior core member, the exterior member including an electromagnetic field source. The electromagnetic brake includes a resilient brake lock member, having a brake torque stiffness, the resilient brake lock member between the interior core member exterior curved surface and the exterior member, the resilient brake lock member engaging the interior core member exterior curved surface with the resilient brake lock member inhibiting rotation between the exterior member and the interior curved core member, wherein an attractive magnetic field applied by the exterior member electromagnetic field source disengages the resilient brake lock member from engaging the interior core member exterior curved surface and allowing for rotation between the exterior member and the interior core member.

In an embodiment the invention includes electromagnetic brake 30 for controlling rotation between first body 32 and second body 34. Electromagnetic brake 30 includes interior curved circular core member 36, the interior core member 36 having exterior curved surface 37. The exterior curved surface 37 provides a friction interface for engaging the interior curved surface of the resilient spring brake lock member 40 engagement inner circumference. In preferred embodiments the exterior curved surface includes a friction material for interfacing and engaging with the resilient spring brake lock member 40.

Electromagnetic brake 30 includes exterior member 38 housing the interior curved circular core member 36. The exterior member 38 encircles the interior core member 36, with the exterior member including an electromagnetic field source.

Electromagnetic brake 30 includes a resilient brake lock member 40, the resilient brake lock member 40 between the interior core member exterior curved surface 37 and the exterior member 38. The resilient brake lock member 40 engages the interior core member exterior curved surface 37 with the resilient brake lock member 40 inhibiting rotation between the exterior member 38 and the interior curved core member 36 , wherein an attractive magnetic field applied by the exterior member electromagnetic field source disengages the resilient brake lock member from engaging the interior core member exterior curved surface and allowing for rotation between the exterior member and the interior core member. Preferably the resilient brake lock member 40 has a spring brake torque stiffness and the brake 30 provides an unpowered rotation inhibiting brake force, with the unpowered rotation inhibiting brake force dependent on the brake torque stiffness. Preferably the exterior member electromagnetic field source including an electromagnetic coil 42, and the brake includes a current source 44, with the current source 44 supplying a current having a current level and a current direction to the electromagnetic coil to generate the attractive electromagnetic field and wherein the rotation inhibiting brake force is not dependent on the current level.

Preferably the brake current source 44 supplies an opposing direction current to the electromagnetic coil 42, the opposing direction current having an opposite current direction, with the electromagnetic coil 42 generating a repelling electromagnetic field to re-engage the resilient spring brake lock member 40 with the interior core member 36.

Preferably the resilient spring brake lock member 40 is comprised of a metallic band. As shown in FIG. 3, resilient spring brake lock member 40 is preferably comprised of a metallic circular band, preferably having an engaged ID and an engagement inner circumference, a band height h, and a band thickness t preferably with h>t. Preferably the resilient spring brake lock member 40 has a magnetic memory. Preferably the resilient spring brake lock member 40 is comprised of a metal, preferably a metal with a magnetic hysteresis. Preferably the resilient spring brake lock member 40 is comprised of steel.

Preferably the resilient spring brake lock member 40 includes a means for reacting a torque between the resilient brake lock member and the exterior member 38 when the resilient brake lock member 40 is engaging the interior core member exterior curved surface 37. Preferably the resilient spring brake lock member 40 includes at least a first antirotation anchor member 48, preferably a first and second tabbed engagement ends which extend outward towards and engage a brake lock recess in exterior member 38, with the antirotation anchor member 48 having an outwardly extending length greater than the air gap clearance between the resilient brake lock member 40 and the exterior member 38 or the air gap clearance between the resilient brake lock member 40 and the interior member 36.

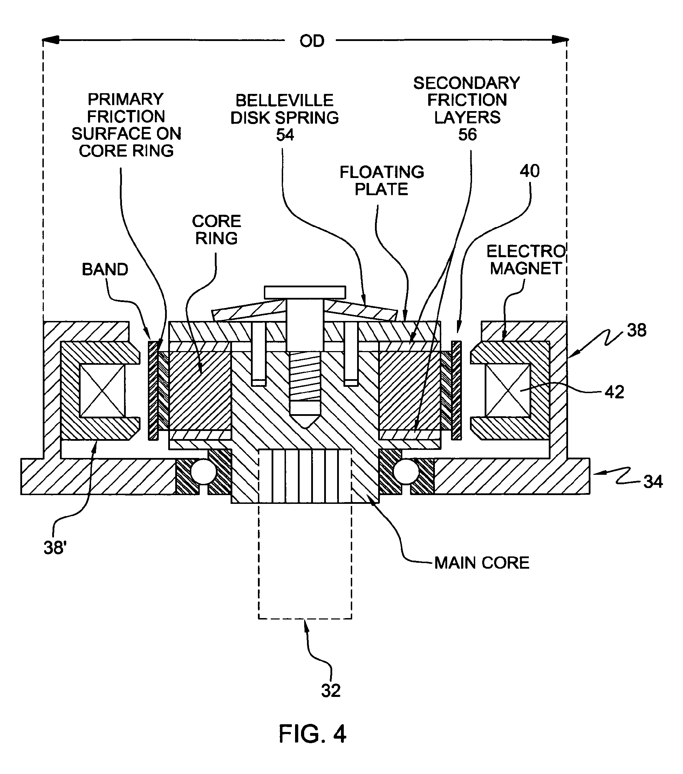

Preferably the brake 30 has a breakaway torque when the resilient brake lock member 40 is engaging the interior core member exterior curved surface 37 and inhibiting rotation between the exterior member 38 and the interior curved core member 36, above the breakaway torque relative rotation is allowed between the interior core first body 32 and the exterior member second body 34. As shown in FIG. 1, above the breakaway torque of brake 30, if first body 32 is maintained stationary, and second body 34 is forced to rotated around it above the breakaway torque the outer member 38 engages the anchor members 48 of resilient spring brake lock member 40 with the engagement inner circumference thereof moving relative to its engaged interface with the exterior curved surface 37. In embodiments the invention includes means for providing a breakaway torque and allowing slippage to avoid overload damage of brake system. In preferred embodiments the means includes secondary engaged friction surfaces, preferably nonmagnetically engaged or activated surfaces, preferably continuously resiliently spring engaged surfaces. FIG. 4 shows an embodiment with a primary rubber friction layer bonded to the core ring. The core ring can rotate relative to the main core. Secondary friction layers are disposed between the core ring and the main core and are spring engaged by a disk spring. Under normal operational conditions sufficient friction force in the secondary layers move the core ring and the main core together and they do not slip relative to each other. When the main friction surface is locked and the torque is too high and exceeds the breakaway torque, slip occurs at the secondary friction surfaces.

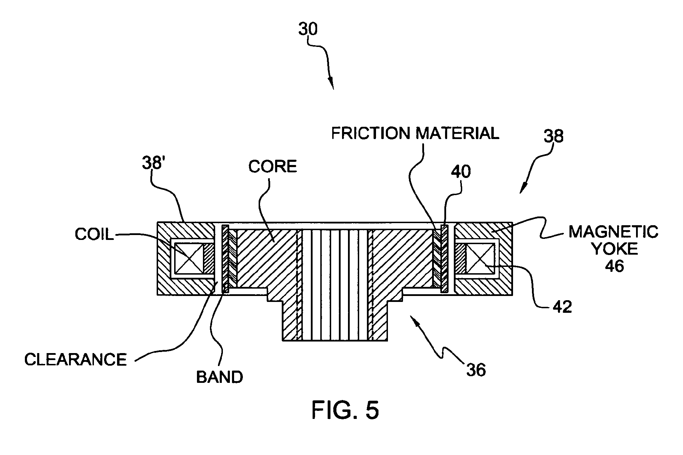

Preferably the exterior member electromagnetic field source including an electromagnetic coil 42, and the brake includes a current source 44, with the current source 44 supplying a current having a current level and a current direction to the electromagnetic coil to generate the attractive electromagnetic field and wherein the rotation inhibiting brake force is not dependent on the current level. Preferably the brake current source 44 supplies an opposing direction current to the electromagnetic coil 42, the opposing direction current having an opposite current direction, with the electromagnetic coil 42 generating a repelling electromagnetic field to re-engage the resilient spring brake lock member 40 with the interior core member 36. Preferably the exterior member electromagnetic field source including an electromagnetic coil yoke member with a north and south pole, the electromagnetic coil yoke member preferably comprised of a metal with a magnetic hysteresis, preferably steel, wherein the yoke has a substantial remnant flux density/ magnetic remnance, and substantial magnetic coercivity, with the yoke and preferably also the resilient brake lock band member 40 becoming magnetized and the resilient brake lock band member 40 remains disengaged, then the reversing opposite current pulse through the EM coil repels the magnetized brake lock band member away from the yoke such as shown in FIG. 5-6. Preferably the short time duration opposing direction current pulse have an opposite current direction then the original current that disengaged the resilient brake lock band member 40, with the reversed current pulsed electromagnetic coil generating a repelling electromagnetic field to re-engage the resilient spring brake lock member with the interior core member.

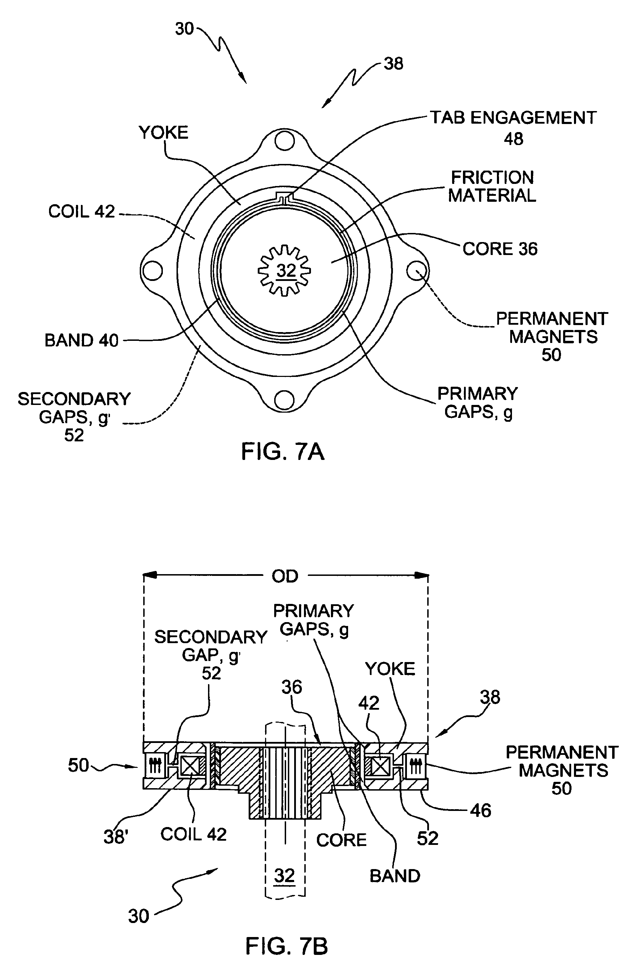

In preferred embodiments brake 30 includes at least a first electromagnetic coil 42 and at least a first permanent magnet 50 wherein the resilient brake lock member spring brake torque stiffness provides the rotation inhibiting brake force, the rotation inhibiting brake force dependent on the brake torque stiffness, not electromagnetic forces from electromagnetic coil or the permanent magnet. In preferred embodiments, outer exterior member 38 is provided with a electromagnetic field source including a yoke with a coil 42 and at least a first magnet 50 such as shown in FIG. 7-9, with the electromagnetic band brake yoke including a wound coil, magnetic poles, and magnets 50 in alignment with the coil 42. Preferably the resilient brake lock member spring brake torque stiffness provides the rotation inhibiting brake force, with the brake including a controlled current supply connected to the first electromagnetic coil 42 for turning the brake on and off, preferably a current pulse supply for providing pulse-on/pulse-off of the brake. Preferably the current pulse supply source 44 provides pulsed current signals +I and -I to the electromagnetic coil 42 to pulse the brake on and off, preferably with current pulses of opposing polarity.

In an embodiment the invention includes a method of making an electromagnetic brake for controlling rotation between a first body and a second body. The method includes providing an interior curved core member, the interior core member having an exterior curved surface. The method includes providing an exterior member, the exterior member including an electromagnetic field source. The method includes providing a resilient brake lock band member. The method includes disposing the resilient brake lock band member and the exterior member around the interior core member, with the resilient brake lock band member between the interior core member exterior curved surface and the exterior member, with the resilient brake lock member engaging the interior core member exterior curved surface with the resilient brake lock member inhibiting rotation between the exterior member and the interior curved core member, wherein an attractive magnetic field applied by the exterior member electromagnetic field source disengages the resilient brake lock member from engaging the interior core member exterior curved surface and allowing for rotation between the exterior member and the interior core member.

In an embodiment the invention includes a method of making electromagnetic brake 30 for controlling rotation between a first body 32 and a second body 34. The method includes providing an interior curved circular core member 36, the interior core member having an exterior curved surface 37. The method includes providing an exterior member 38, the exterior member including an electromagnetic field source. The method includes providing a resilient brake lock band member 40. The method includes disposing the resilient brake lock band member 40 and the exterior member 38 around the interior core member 36, with the resilient brake lock band member 40 between the interior core member exterior curved surface 37 and the exterior member 38, with the resilient brake lock member 40 engaging the interior core member exterior curved surface 37 with the resilient brake lock member 40 inhibiting rotation between the exterior member 38 and the interior curved core member 36, wherein an attractive magnetic field applied by the exterior member electromagnetic field source disengages the resilient brake lock member 40 from engaging the interior core member exterior curved surface 37 and allowing for rotation between the exterior member 38 and the interior core member 36.

Preferably providing the resilient brake lock band member 40 includes providing the resilient brake lock band member 40 with a spring brake torque stiffness and the brake 30 provides an unpowered rotation inhibiting brake force, the unpowered rotation inhibiting brake force dependent on the brake torque stiffness.

Preferably providing the exterior member electromagnetic field source includes providing an electromagnetic coil 42 and a current source 44, the current source 44 supplying a current having a current level and a current direction to the electromagnetic coil 42 to generate the attractive electromagnetic field, and the rotation inhibiting brake force is not dependent on the current level. Preferably the exterior member electromagnetic field source includes a wound coil and magnetic poles. Preferably the exterior member electromagnetic field source includes a magnetic pole yoke member 46.

Preferably the brake current source supplies an opposing direction current to the electromagnetic coil 42, the opposing direction current having an opposite current direction, with the electromagnetic coil 42 generating a repelling electromagnetic field to re-engage the resilient spring brake lock member 40 with the interior core member 36.

Preferably providing the resilient spring brake lock member 40 includes providing resilient spring brake lock member 40 comprised of a metallic band, preferably a circular metal band, preferably having an engaged ID and an engagement inner circumference, and a band height h, a band thickness t, preferably with h>t.

Preferably providing the resilient spring brake lock member 40 includes providing resilient spring brake lock member 40 with a magnetic memory, preferably with the brake lock member comprised of a metal band, preferably comprised of a metal with a magnetic hysteresis, prefer comprised of steel.

Preferably providing the exterior member electromagnetic field source includes providing an electromagnetic coil yoke member 46 with a north and south pole, the electromagnetic coil yoke member 46 comprised of a metal with a magnetic hysteresis, preferably steel. Preferably the yoke 46 has a substantial remnant flux density/ magnetic remnance, and a substantial magnetic coercivity, the yoke 46 and preferably the band resilient spring brake lock member 40 becoming magnetized and band resilient spring brake lock member 40 remains disengaged, such as shown in FIG 5-6. Then a reversing opposite current pulse is supplied through the EM coil 42 to repel the magnetized band 40 away from the yoke 46, preferably a short time duration opposing direction current pulse having an opposite current direction then the original current that disengaged the brake 30. The reversed current pulsed electromagnetic coil 42 generates a repelling electromagnetic field to re-engage the resilient spring brake lock member 40 with the interior core member 36.

In preferred embodiments the exterior member electromagnetic field source includes at least a first electromagnetic coil 40 and at least a first permanent magnet 50, and wherein the rotation inhibiting brake force is not dependent on the first electromagnetic coil 40 and/or the first permanent magnet 50 with the rotation inhibiting brake force dependent on the brake torque stiffness, not electromagnetic forces from electromagnetic coil 40 or permanent magnet 50. In preferred embodiments, outer exterior member 38 is provided with an electromagnetic field source including a yoke with a coil 42 and at least a first magnet 50 such as shown in FIG. 7-9, with the electromagnetic band brake yoke including a wound coil, magnetic poles, and magnets in alignment. Preferably the resilient brake lock member spring brake torque stiffness provides the rotation inhibiting brake force, with the brake including a controlled current supply connected to the first electromagnetic coil 42 for turning the brake on and off, preferably a current pulse supply for providing pulse-on/pulse-off of the brake. Preferably the method includes providing pulsed current signals to the electromagnetic coil 42 to pulse the brake on and off, preferably with current pulses of opposing polarity.

Preferably the resilient spring brake lock member 40 includes at least a first antirotation anchor member for reacting a torque between the resilient brake lock member and the exterior member 38 when the resilient brake lock member 40 is engaging the interior core member 36. Preferably the resilient spring brake lock member 40 includes at least a first antirotation anchor member 48, preferably a first and second tabbed engagement ends which extend outward towards and engage a brake lock recess in exterior member 38, with the antirotation anchor member 48 having an outwardly extending length greater than the air gap clearance between the resilient brake lock member 40 and the exterior member 38 or the air gap clearance between the resilient brake lock member 40 and the interior member 36.

Preferably the brake 30 has a breakaway torque when the resilient brake lock member 40 is engaging the interior core member exterior curved surface 37 and inhibiting rotation between the exterior member 38 and the interior curved core member 36, above the breakaway torque relative rotation is allowed between the interior core first body 32 and the exterior member second body 34. As shown in FIG. 1, above the breakaway torque of brake 30, if first body 32 is maintained stationary, and second body 34 is forced to rotated around it above the breakaway torque the outer member 38 engages the anchor members 48 of resilient spring brake lock member 40 with the engagement inner circumference thereof moving relative to its engaged interface with the exterior curved surface 37. In embodiments the invention includes means for providing a breakaway torque and allowing slippage to avoid overload damage of brake system. In preferred embodiments the means includes secondary engaged friction surfaces, preferably nonmagnetically engaged or activated surfaces, preferably continuously resiliently spring engaged surfaces. FIG. 4 shows an embodiment with a primary rubber friction layer bonded to the core ring. The core ring can rotate relative to the main core. Secondary friction layers are disposed between the core ring and the main core and are spring engaged by a disk spring. Under normal operational conditions sufficient friction force in the secondary layers move the core ring and the main core together and they do not slip relative to each other. When the main friction surface is locked and the torque is too high and exceeds the breakaway torque, slip occurs at the secondary friction surfaces.

In an embodiment the invention includes a method of controlling motion between a first body and a second body. The method includes providing a first body coupled interior core member. The method includes providing a second body coupled exterior member, the second body coupled exterior member including an electromagnetic field source. The method includes providing a resilient brake lock spring band member with spring brake torque stiffness. The method includes disposing the resilient brake lock band member between the first body coupled interior core member and the second body coupled exterior member, with the resilient brake lock member engaging the first body coupled member with the resilient brake lock member inhibiting rotation between the second body coupled member and the first body coupled member with an unpowered rotation inhibiting brake force, the unpowered rotation inhibiting brake force dependent on the spring brake torque stiffness. The method includes applying with the second body coupled member electromagnetic field source an attractive magnetic field which disengages the resilient brake lock member from engaging the first body coupled member and allowing for rotation between the second body coupled member and the first body coupled member.

The invention includes controlling rotation motion between first body 32 and second body 34. The method includes providing a first body coupled interior curved circular core member 36, the first body coupled interior core member 36 preferably having an exterior curved surface 37. The method includes providing a second body coupled exterior member 38, the second body coupled exterior member 38 including an electromagnetic field source. The method includes providing a resilient brake lock spring band member 40 with a spring brake torque stiffness. The method includes disposing the resilient brake lock band member 40 between the first body coupled interior curved circular core member 36 and the second body coupled exterior member 38, with the resilient brake lock member 40 engaging the first body coupled interior curved circular core member 36 with the resilient brake lock member 40 inhibiting rotation between the second body coupled exterior member 38 and the first body coupled interior curved circular core member 36 with an unpowered rotation inhibiting brake force, the unpowered rotation inhibiting brake force dependent on the spring brake torque stiffness.

The method includes applying with the second body coupled exterior member electromagnetic field source an attractive magnetic field which disengages the resilient brake lock member from engaging the first body coupled core member and allowing for rotation between the second body coupled exterior member and the first body coupled interior curved circular core member.

Preferably providing the second body coupled exterior member electromagnetic field source includes providing an electromagnetic coil 42 and a current source 44, the current source supplying a current I having a current level and a current direction to the electromagnetic coil to apply the attractive electromagnetic field and wherein the rotation inhibiting brake force is not dependent on the current level. Preferably the brake current source 44 supplies an opposing direction current to the electromagnetic coil, the opposing direction current having an opposite current direction, with the electromagnetic coil 42 generating a repelling electromagnetic field to re-engage the resilient spring brake lock member 40 with the first body coupled interior curved circular core member 36.

Preferably providing the resilient spring brake lock member 40 includes providing resilient spring brake lock member 40 comprised of a metallic band, preferably a circular metal band, preferably having an engaged ID and an engagement inner circumference, and a band height h, a band thickness t, preferably with h>t. Preferably providing the resilient spring brake lock member 40 includes providing resilient spring brake lock member 40 with a magnetic memory, preferably with the brake lock member comprised of a metal band, preferably comprised of a metal with a magnetic hysteresis, preferably comprised of steel.

Preferably the second body coupled exterior member electromagnetic field source includes an electromagnetic coil yoke member 46 with a north and south pole, the electromagnetic coil yoke member 46 comprised of a metal with a magnetic hysteresis. Preferably the yoke 46 has a substantial remnant flux density/ magnetic remnance, and a substantial magnetic coercivity, the yoke 46 and preferably the band resilient spring brake lock member 40 becoming magnetized and band resilient spring brake lock member 40 remains disengaged, such as shown in FIG 5-6. Then a reversing opposite current pulse is supplied through the EM coil 42 to repel the magnetized band 40 away from the yoke 46, preferably a short time duration opposing direction current pulse having an opposite current direction then the original current that disengaged the brake 30. The reversed current pulsed electromagnetic coil 42 generates a repelling electromagnetic field to re-engage the resilient spring brake lock member 40 with the interior core member 36.

Preferably the method of controlling motion includes providing the resilient spring brake lock member with at least a first antirotation anchor member for reacting a torque between the resilient brake lock member and the exterior member 38 when the resilient brake lock member 40 is engaging the interior core member 36. Preferably the resilient spring brake lock member 40 includes at least a first antirotation anchor member 48, preferably a first and second tabbed engagement ends which extend outward towards and engage a brake lock recess in exterior member 38, with the antirotation anchor member 48 having an outwardly extending length greater than the air gap clearance between the resilient brake lock member 40 and the exterior member 38 or the air gap clearance between the resilient brake lock member 40 and the interior member 36.

In preferred embodiments providing the exterior member electromagnetic field source for locking and unlocking the brake and controlling motion includes providing at least a first electromagnetic coil 40 and at least a first permanent magnet 50. In preferred embodiments, outer exterior member 38 is provided with a electromagnetic field source including a yoke with a coil 42 and at least a first magnet 50 such as shown in FIG. 7-9, with the electromagnetic band brake yoke including a wound coil, magnetic poles, and magnets in alignment. Preferably the resilient brake lock member spring brake torque stiffness provides the rotation inhibiting brake force, with the brake 30 including a controlled current supply 44 connected to the first electromagnetic coil 42 for turning the brake on and off, preferably a current pulse supply for providing pulse-on/pulse-off of the brake. Preferably the method includes providing pulsed current signals to the electromagnetic coil 42 to pulse the brake on and off, preferably with current pulses of opposing polarity.

Preferably controlling motion includes providing a breakaway torque when the resilient brake lock member 40 is engaging the interior core member exterior curved surface 37 and inhibiting rotation between the exterior member 38 and the interior curved core member 36. Above the breakaway torque relative rotation is allowed between the interior core first body 32 and the exterior member second body 34. As shown in FIG. 1, above the breakaway torque of brake 30, if first body 32 is maintained stationary, and second body 34 is forced to rotated around it above the breakaway torque the outer member 38 engages the anchor members 48 of resilient spring brake lock member 40 with the engagement inner circumference thereof moving relative to its engaged interface with the exterior curved surface 37. Preferably providing a breakaway torque includes allowing for slippage to avoid overload damage of the brake system. In preferred embodiments the method includes providing secondary engaged friction surfaces, preferably nonmagnetically engaged or activated surfaces, preferably continuously resiliently spring engaged surfaces. FIG. 4 shows an embodiment with a primary rubber friction layer bonded to the core ring. The core ring can rotate relative to the main core. Secondary friction layers are disposed between the core ring and the main core and are spring engaged by a disk spring. Under normal operational conditions sufficient friction force in the secondary layers move the core ring and the main core together and they do not slip relative to each other. When the main friction surface is locked and the torque is too high and exceeds the breakaway torque, slip occurs at the secondary friction surfaces.

The brake 30 provides engagement with no-power applied and is preferably released when a current is applied to the electromagnetic coil 42, that preferably pulls the spring brake lock band 40 outward and away from the braked surface of core 36. Preferably the spring stiffness of the spring brake lock band 40 causes the unpowered braking engagement. Various degrees of engagement torque can be achieved depending on the coefficient of friction of the surface which the spring brake lock band 40 engages. With a steel band against a rubber surface, large torques in a small package are provided. The brake preferably is utilized as a failsafe or power to-unlock brake in a machine. The brake preferably is utilized as a failsafe or power to-unlock brake mounted with an electric motor with the brake inhibiting motion of the motor when the motor is not energized or commanded to rotate .The brake preferably is utilized as a failsafe or power to-unlock brake in a robotic machine, preferably an industrial robot, preferably an industrial assembly robot multi-joint robot arm with a motor and a failsafe power to unlock electromagnetic brake at the robot arm joints, with the brake inhibiting motion of the robot arm joint when the motor is not energized or commanded to rotate.The brake preferably is utilized as a failsafe or power to-unlock vehicle machine brake, preferably in a parking brake system for use in vehicles such as aircraft, automobiles or trucks. The arrangement of a brake embodiment is shown in FIG. 1-2 in the un-powered engaged (brake locked no current applied) and powered disengaged (brake released current applied) conditions, respectively. The brake 30 shown in FIG. 1-2 is a double-acting brake in that it locks in both clockwise and counterclockwise directions. The friction material preferably provides an appropriate coefficient of friction and has satisfactory wear properties. For high torque, the friction material is a layer of rubber elastomer that is bonded to the core 36. In the locked, off-state condition, the springiness of the band 40 causes it to slightly squeeze the friction surface and produces a very large locking torque with the rubber elastomeric surface that has a coefficient of friction between 1 and 4. When current is applied to the coil 42 a magnetic force that pulls the band 40 radially outward from the core 36 is produced. This causes the band 40 to separate from the friction surface and the brake 30 is released.

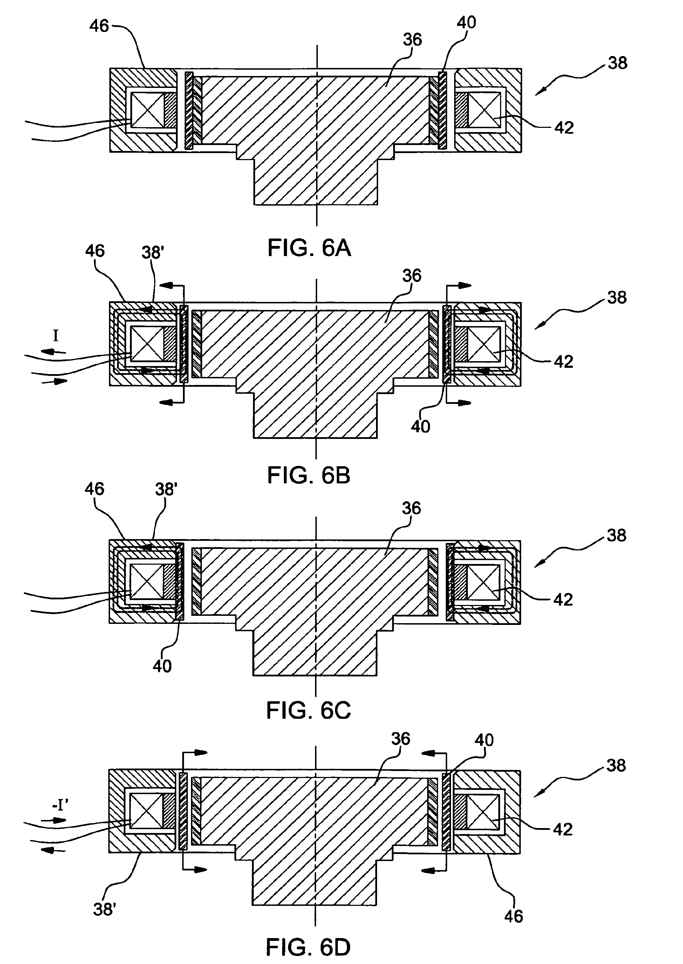

In embodiments, brake 30 may preferably stay either in a locked or unlocked state without the application of electric current power. A current pulse of the appropriate polarity is applied to the coil 42 to cause it to transition from the locked to unlocked state or visa versa. In embodiments such as shown in FIG. 5-6, brake 30 does not include explicit permanent magnets, preferably with the magnetic yoke and/or the brake lock band member 40 made from steel alloys that exhibit a significant amount of magnetic Hysteresis and can be magnetized and demagnetized by current pulses applied to the coil 42. Preferably, the steel alloy used in the yoke 46 exhibits a large substantial remnant flux density or remanence and a significant magnetic coercivity such that when the coil 42 is given a current pulse and the brake lock band member 40 is pulled radially outward, the yoke (and/or band) itself becomes magnetized and can keep the brake lock band member 40 in the disengaged position until a reverse current pulse is applied to the coil 42. As shown in FIG. 6 a reverse polarity current pulse to the coil 42 as shown in FIG. 6D cancels or demagnetizes the yoke 46 and allows the brake lock band member 40 to detach from the yoke 46 and collapse radially inward as indicated by the green arrows. The brake lock band member 40 reengages the core 36 and returns to the un-powered locked condition of FIG. 6A. In embodiments such as shown in FIG. 7-9, permanent magnets 50 are utilized instead of the magnetizable steel in the yoke 46.

Preferably the magnetizable steel alloys have a magnetic remanence Br, a coercivity Hc, a slope of the B/H demagnetization curve, or recoil permeability at the working point of the brake system 30 to provide for the pulse onning/pulse offing of the brake. Preferred steel alloys include high carbon steel, tool steels, D2, A2, mild steels such as 4140/4142, magnetic grades of stainless steel such as 410 and 440C.

FIG. 6A-D illustrate pulse-off/pulse-on operation of the brake 30 with the magnetic yoke and the brake lock band member 40. In FIG. 6, the brake stays in the un-powered (no current), locked or engaged condition A (FIG. 6A) the brake lock band member 40 is squeezing the radial surface of the core 36 and preventing the core 36 from rotating. Next, in FIG. 6B, a current pulse is applied to the coil 42. This causes the brake lock band member 40 to be pulled radially outward as indicated by the green arrows. The lines of magnetic flux are indicated by the dashed red lines. The pulse is applied for a time sufficient to allow the band to contact the radial faces of the magnetic yoke 46. Once the brake lock band member 40 has contacted the yoke 46 the magnetic field intensity peaks and the steel alloy of the yoke 46 becomes magnetized. Current to the coil 42 is now removed as shown in FIG. 6C and the remnant magnetic field due to the magnetized yoke 46 keeps the band in the disengaged position without additional current being applied.

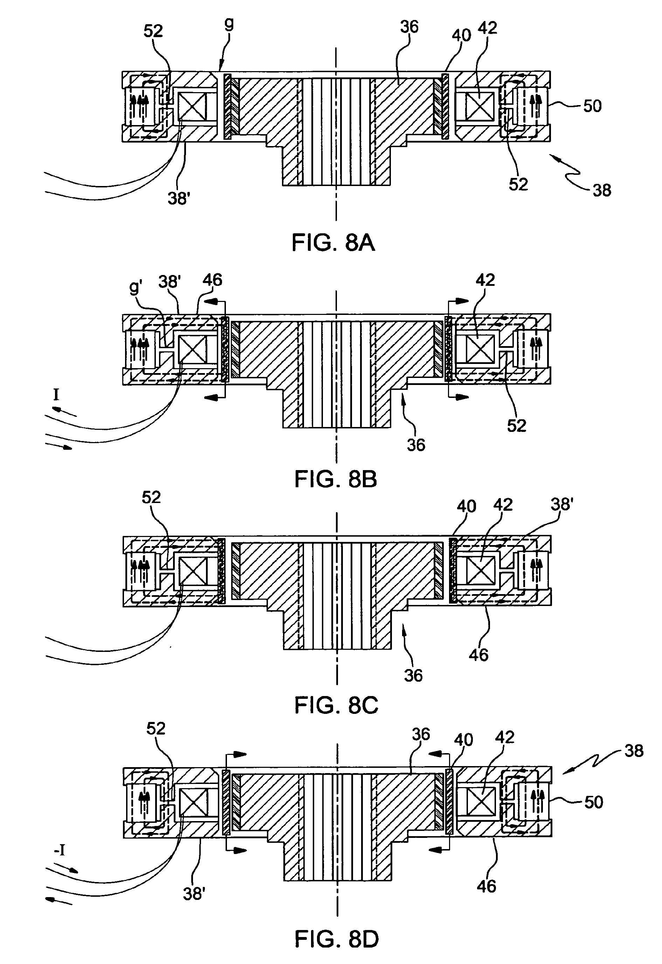

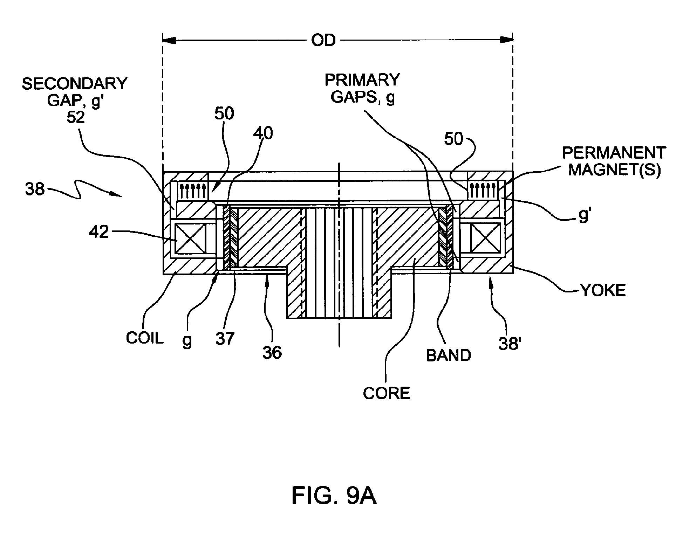

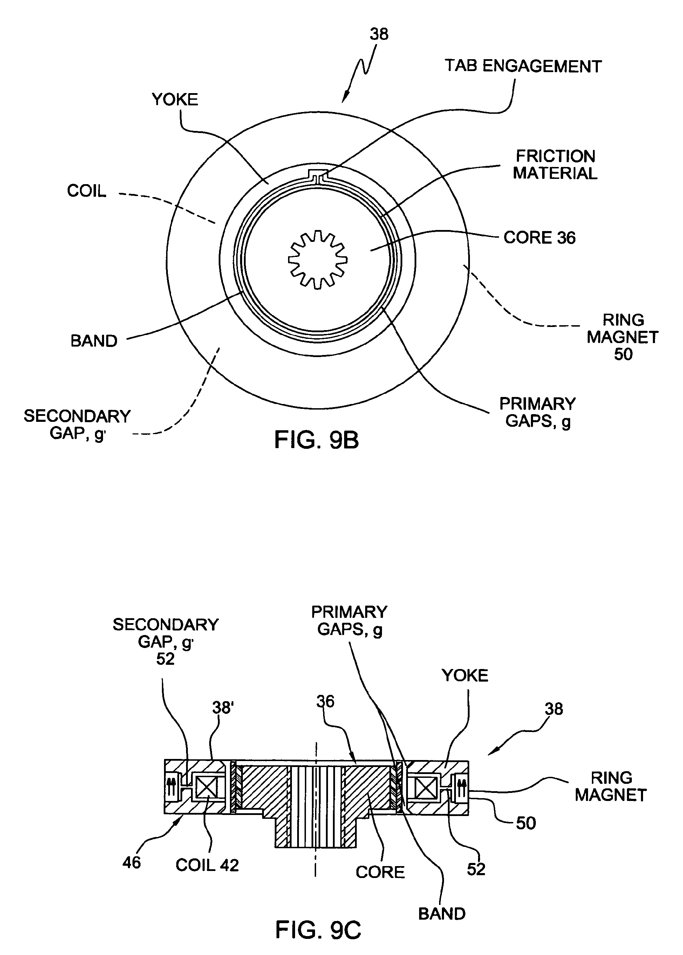

In the embodiment shown in FIG. 7, at least one permanent magnet 50 is used in lieu of (or in addition to) a steel alloy in the yoke 46 that can be magnetized or demagnetized. Preferably the yoke includes a secondary non-magnetic gap 52, preferably a secondary air gap. In preferred embodiments the secondary non-magnetic gap 52 is a space filled with a non-magnetic material or is a void of material (gap surrounding magnetic material defines a void gap space). In preferred embodiments the secondary gap 52 is an air gap. In alternative embodiments the secondary non-magnetic gap 52 is a space filled with a non-magnetic solid material such as plastic or aluminum. The secondary gap g' 52 provides an alternative path for the magnetic flux that in one condition has a lower magnetic reluctance than the path through the primary gaps g (primary gap air void spaces g between the brake lock band member 40 and the core member 36 and the yoke 46) between the brake lock band member 40 and in a second condition a higher reluctance than the path through the brake lock band member 40 when the primary gaps g are closed. FIG. 8A-D show the sequence of operation of the brake 30. In FIG.8A the brake 30 is engaged with no current going to the coil 42. The magnetic flux from the permanent magnet 50 travels preferentially across the small secondary gap g' 52 because this path has a much lower magnetic reluctance compared to the path across the primary gaps g and through the brake lock band member 40. A current pulse to the coil 42 as shown in FIG. 8B cancels the flux through the secondary gap g' 52 and effectively redirects all the magnetic flux though the primary gaps g and the band causing the brake lock band member 40 to be pulled radially outward as indicated by the arrows. Once the brake lock band member 40 contacts the yoke 46 as shown in FIG. 8C the current pulse ends but now the magnetic flux from permanent magnet 50 prefers the lower reluctance path through the band 40 keeping it in contact with the yoke 46 and the brake 30 unlocked. A reverse current pulse to the coil 42 as shown in FIG.8D cancels the flux through the brake lock band member 40 and allows it to come loose from the yoke 46. The flux from the magnet 50 now goes back to the secondary gap g' 52 and the brake 30 returns to the locked state in FIG. 8A once again. A further embodiment with permanent magnets 50, primary gaps g and secondary gap g' 52 is shown in FIG. 9A, preferably providing a bistable pulse-on/pulse-off brake with permanent magnets axially spaced from the coil, compared to radially spaced from the coil. a ring magnet rather than the plurality of individual discrete magnets 50 used in FIG. 7-8.A further embodiment with permanent magnet 50 is shown in FIG. 9B-C, preferably with a continuous ring magnet rather than the plurality of individual discrete magnets 50 used in FIG. 7-8. Preferably the permanent magnets are provided with the primary gaps g and secondary gap g' to provide a failsafe power to unlock brake, preferably a machine brake. Preferably the permanent magnets are provided with the primary gaps g and secondary gap g' to provide a failsafe power to unlock brake, preferably a machine vehicle brake for inhibiting a vehicle motion when no current power is provided to the coil. Preferably the permanent magnets are provided with the primary gaps g and secondary gap g' to provide a failsafe power to unlock brake, preferably a machine motor mounted brake for inhibiting a motor motion when no current power is provided to the coil. Preferably the permanent magnets are provided with the primary gaps g and secondary gap g' to provide a failsafe power to unlock brake, preferably a robot machine brake for inhibiting a robot motion when no current power is provided to the coil.

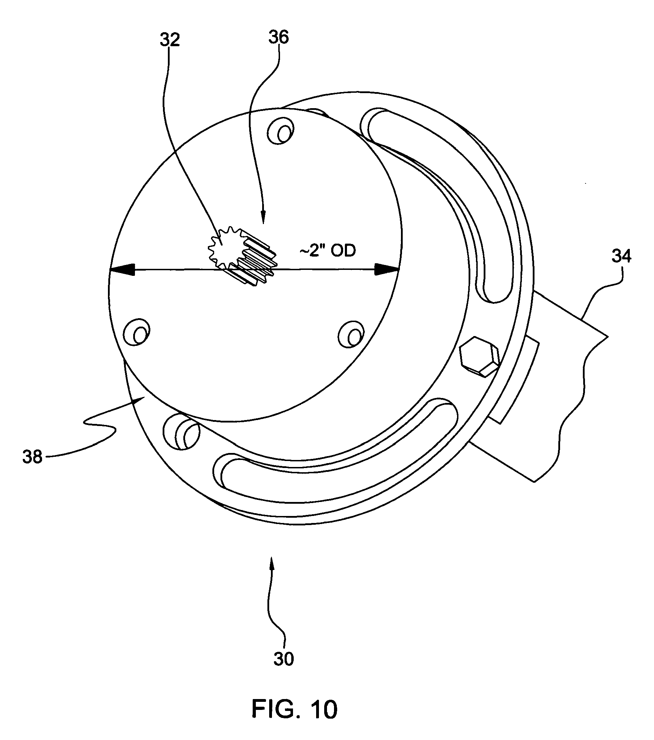

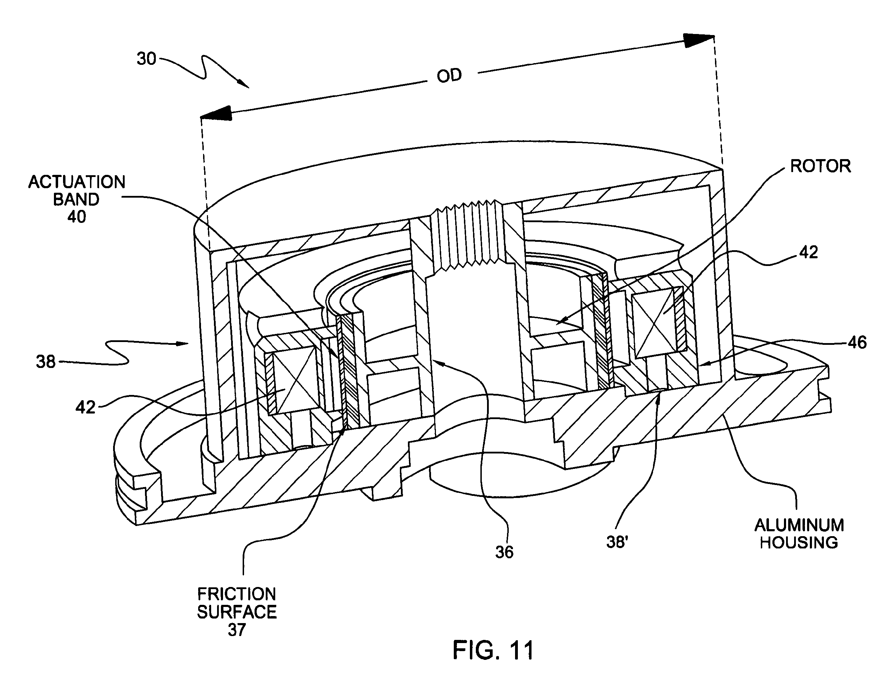

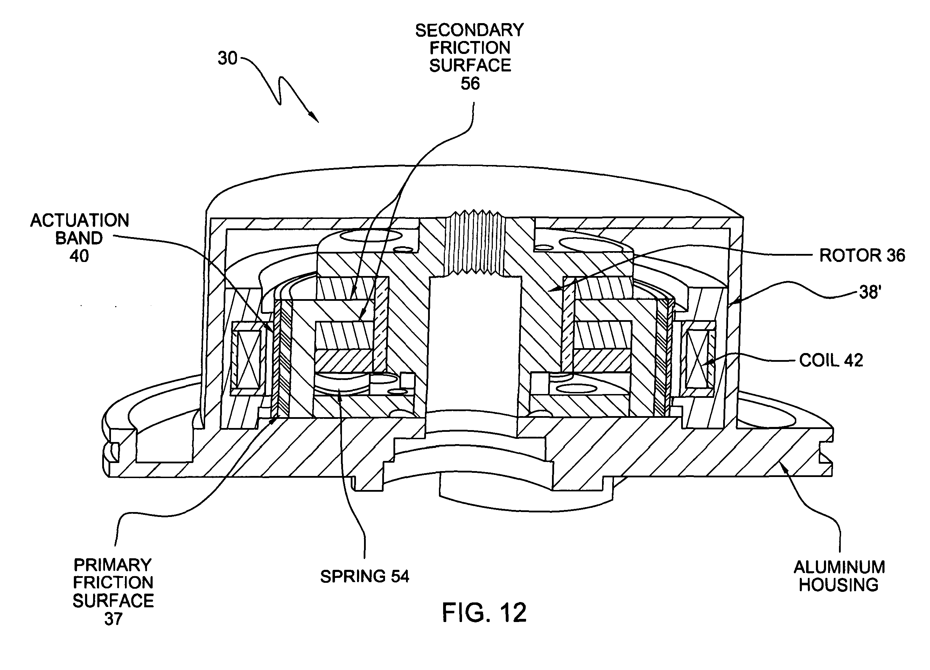

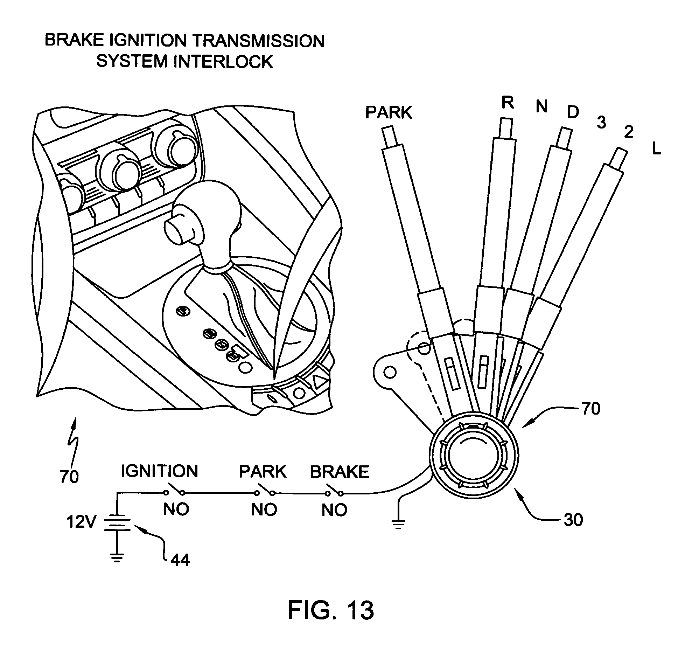

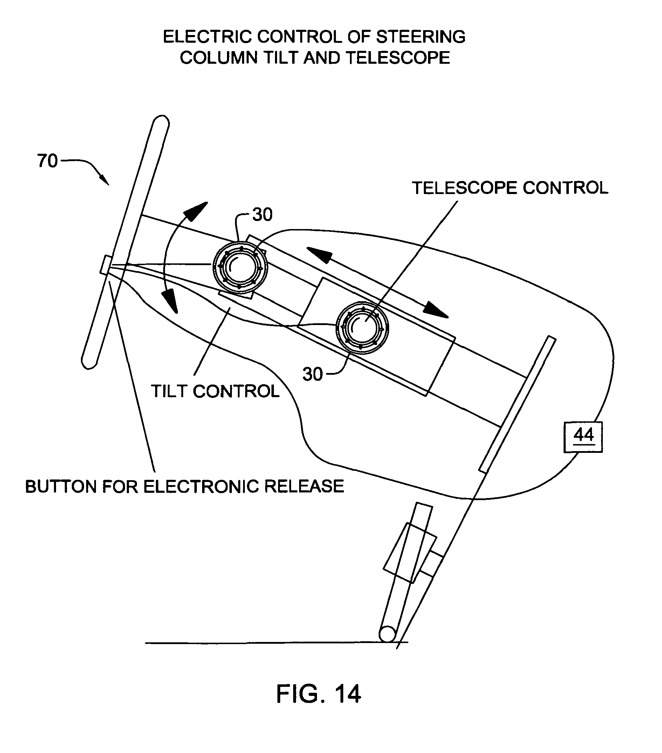

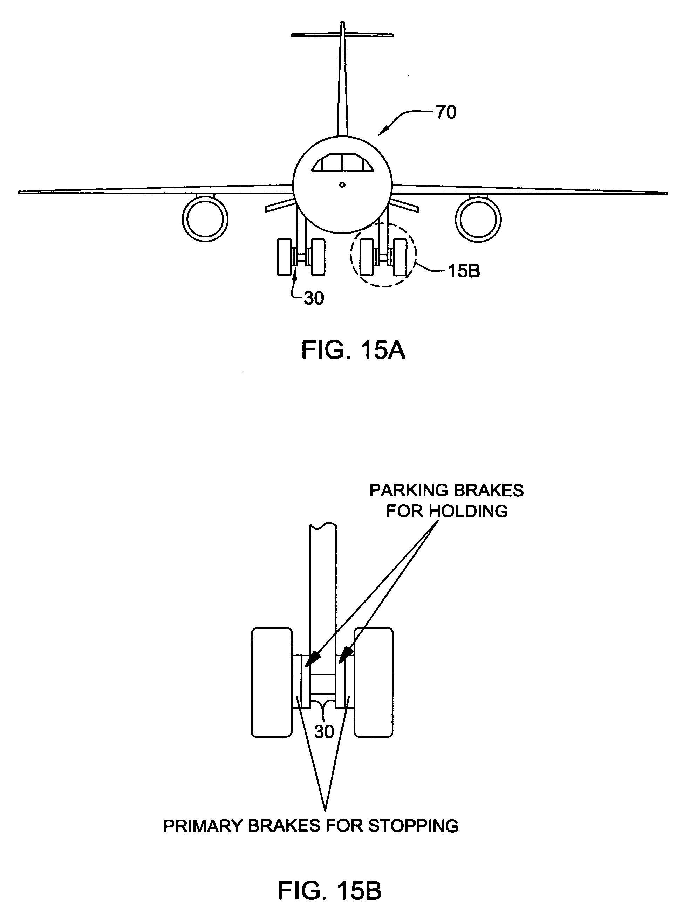

FIG. 10 illustrates a brake 30 with outer exterior member 38 for coupling with a second body 34 and inner core member 36 for coupling with a first body 32. FIG. 11 illustrates an interior brake assembly embodiment with the housing of FIG. 10. FIG. 12 illustrates an alternative brake assembly embodiment with the housing of FIG. 10, with a spring 54 urging engaged contact with secondary friction surfaces 56 similar to FIG. 4, to provide a breakaway torque and allowing slippage to avoid overload damage of the brake system. FIG. 13 shows a brake system with brake 30 utilized in as a brake in a vehicle machine, with the machine vehicle brake system controlling rotation motion of the vehicle shifter, preferably when the brake is unpowered the shifter is locked and cannot be moved out of park. FIG. 14 shows a brake system with brakes 30 utilized in as a brake in a vehicle machine, with the machine vehicle brake system controlling steering column motion and position of the vehicle steering wheel column, preferably with a control button providing current from a current source 44 to release a brake 30 to allow adjustment and movement of the steering wheel first and second bodies, with the brakes failing to a locked condition. FIG. 15 shows an aircraft machine vehicle parking brake system with brakes 30 for use for preventing relative rotation between first and second vehicle body parts of the aircraft parking brake system when the aircraft has been stopped on land. With such parking and vehicle applications of brake 30, preferably power (current) must be supplied to release and unlock the brake and allow relative motion between the first and second body, and when power (current) is not supplied the brake is preferably locked and inhibits motion between the first and second body, with the brake failing to the locked condition.

In an embodiment the invention includes a brake system 30 for controlling rotation between a first body 32 and a second body 34. The brake system includes an interior core member 36, the interior core member coupling with the first body 32. The brake system includes an outer exterior member 38, the outer exterior member 38 enclosing the interior core member 36, the outer exterior member 38 coupling with the second body 34. The brake system 30 includes a resilient spring brake lock member 40 having a brake torque stiffness, the resilient spring brake lock member 40 between the interior core member 36 and the outer exterior member 38, the resilient spring brake lock member 40 engaging the interior core member 36 wherein the resilient spring brake lock member 40 inhibits rotation between the outer exterior member 40 and the interior core member 36. The brake system 30 includes an electromagnetic field (EMF-dotted flux lines with arrows) applied by an electromagnetic unlocking member 38' which disengages the resilient spring brake lock member 40 from engaging the interior core member 36 and provides for rotation between the outer exterior member 38 and the interior core member 36, the electromagnetic unlocking member 38' controlling rotation between the first body 32 and the second body 34. In preferred embodiments the electromagnetic unlocking member 38' is an outer exterior electromagnetic unlocking member, with the electromagnetic unlocking member 38' radially disposed outboard from the interior core member 36.

In preferred embodiments the electromagnetic unlocking member 38' is an interior core electromagnetic unlocking member, with the electromagnetic unlocking member 38' radially disposed on the interior core and inboard from the outer exterior member 38.

In preferred embodiments the interior core electromagnetic unlocking member 38' includes a radially outboard coil 42 and at least a first radially inboard permanent magnet 50. In preferred embodiments the interior core electromagnetic unlocking member 38' includes a radially inboard coil 42 and at least a first radially outboard permanent magnet 50. Preferably the interior core electromagnetic unlocking member 38' includes a coil 42 and at least a first permanent magnet 50.

Preferably the electromagnetic unlocking member 38' includes an electromagnetic coil 42 and at least a first permanent magnet 50, and the brake system includes a current source 44, the current source supplying a first current pulse having a current level and a current direction to the electromagnetic coil to generate the electromagnetic field . Preferably the brake system current source 44 supplies a second pulse-on current pulse to the electromagnetic coil 42, the second pulse-on current pulse re-engaging the resilient spring brake lock member 40 with the interior core member 36. Preferably the resilient spring brake lock member is comprised of a metallic band. Preferably the electromagnetic unlocking member 38' includes a coil 42 and at least a first permanent magnet 50 and a primary gap g and a secondary gap g'.

Preferably the brake system 30 includes a motor 72, the motor comprised of the first body 32 and the second body 34, wherein the the electromagnetic unlocking member 38' disengages the resilient spring brake lock member 40 from engaging the interior core member 36 and provides for rotation between the outer exterior member 38 and the interior core member 36 when the motor 72 is energized. Preferably the brake system 30 and motor 72 are integrated together to provide a motor mounted brake 30 with the brake locking the motor in position when the motor is at rest. Preferably the motor is an electric motor 72 and the brake 30 and its coil 42 receive power to unlock when the motor is operating and rotating. Preferably the brake 30 is mounted on the motor 72 to provide a machine with the interior core member 36 coupled to a first motor body member 32, preferably a motor shaft member which is driven to rotate relative to a motor housing stationary secondary body member 34. Preferably the brake 30 outer exterior member 38 is coupled to the motor housing stationary secondary body member 34 with the brake lock member 40 engagement inhibiting rotation of the motor shaft.

Preferably the brake system 30 includes a vehicle machine 70, the vehicle comprised of the first body 32 and the second body 34, wherein the the electromagnetic unlocking member 38' disengages the resilient spring brake lock member 40 from engaging the interior core member 36 and provides for rotation between the outer exterior member 38 and the interior core member 36 when a relative vehicle motion between the first body 32 and the second body 34 is desired. The electromagnetic unlocking member 38' disengages the resilient spring brake lock member 40 from engaging the interior core member and provides for rotation between the outer exterior member and the interior core member to provide for the vehicle motion between the first body and the second body of the vehicle 70.

Preferably the brake system 30 includes a robot machine 74, the robot 74 comprised of the first body 32 and the second body 34, wherein the electromagnetic unlocking member 38' disengages the resilient spring brake lock member 40 from engaging the interior core member 36 and provides for rotation between the outer exterior member 38 and the interior core member 36 to provide for a robot motion between the first body 32 and the second body 34. The brake preferably is utilized as a failsafe or power to-unlock brake in the robotic machine 74, preferably an industrial robot 74, preferably an industrial assembly robot multi-joint robot arm 74 with a motor 72 and a failsafe power to unlock electromagnetic brake 30 at the robot arm joints, with the brake 30 inhibiting motion of the robot arm joint when the motor 72 is not energized or commanded to move.

In an embodiment the invention includes a vehicle brake system 30 for controlling rotation between a first vehicle body 32 and a second vehicle body 34 for a vehicle 70. The vehicle brake system 30 includes an interior core member 36, the interior core member coupling with the first vehicle body 32. The vehicle brake system 30 includes an outer exterior member 38, the outer exterior member 38 enclosing the interior core member 36, the outer exterior member coupling with the second vehicle body 34. The vehicle brake system includes a resilient spring brake lock member 40 having a brake torque stiffness, the resilient spring brake lock member 40 between the interior core member 36 and the outer exterior member 38, the resilient spring brake lock member 40 engaging the interior core member 36 wherein the resilient spring brake lock member 40 inhibits rotation between the outer exterior member 38 and the interior core member 36 and the first and second vehicle body members 32 and 34. The vehicle brake system 30 includes an electromagnetic field (EMF dotted flux lines with arrows) applied by an electromagnetic unlocking member 38' which disengages the resilient spring brake lock member 40 from engaging the interior core member 36 and provides for rotation between the outer exterior member 38 and the interior core member 36 and for relative motion between the first vehicle body 32 and the second vehicle body 34. Preferably the vehicle brake system includes a coil 42, at least a first permanent magnet 50, a primary gap g and a secondary gap g'.

In an embodiment the invention includes a robot brake system 30 for controlling rotation between a first robot body 32 and a second robot body 34 of a robot 74. The robot brake system 30 including an interior core member 36, the interior core member 36 coupling with the first robot body member 32. The robot brake system 30 including an outer exterior member 38, the outer exterior member 38 enclosing the interior core member 36, the outer exterior member 38 coupling with the second robot body 34. The robot brake system 30 including a resilient spring brake lock member 40 having a brake torque stiffness, the resilient spring brake lock member between the interior core member 36 and the outer exterior member 38, the resilient spring brake lock member 40 engaging the interior core member 36 wherein the resilient spring brake lock member 40 inhibits rotation between the outer exterior member 38 and the interior core member 36 and the first robot body 32 and the second robot body 34. The robot brake system includes an electromagnetic field (EMF dotted flux lines with arrows) applied by an electromagnetic unlocking member 38' which disengages the resilient spring brake lock member 40 from engaging the interior core member 36 and provides for rotation between the outer exterior member 38 and the interior core member 36 and relative motion between the first robot body 32 and the second robot body 34. Preferably the robot brake system 30 includes a coil 42, a at least a first permanent magnet 50, a primary gap g and a secondary gap g'.

In an embodiment the invention includes machines, such as machines 70, 72, 74. The machine includes a first machine body 32 and a second machine body 34, an interior core member 36, the interior core member 36 coupling with the first machine body 32, and an outer exterior member 38, the outer exterior member 38 enclosing the interior core member 36, the outer exterior member 38 coupling with the second machine body 34. The machine includes a resilient spring brake lock member 40 having a brake torque stiffness, the resilient spring brake lock member 40 between the interior core member 36 and the outer exterior member 38, the resilient spring brake lock member 40 engaging the interior core member 36 wherein the resilient spring brake lock member 40 inhibits rotation between the outer exterior member 38 and the interior core member 36 and the first machine body 32 and a second machine body 34, and an electromagnetic field (EMF dotted flux lines with arrows) applied by an electromagnetic unlocking member 38' which disengages the resilient spring brake lock member 40 from engaging the interior core member 36 and provides for rotation between the outer exterior member 38 and the interior core member 36 and for relative motion between the first machine body 32 and the second machine body 34. Preferably the machine electromagnetic unlocking member 38' includes a coil 42, a plurality of permanent magnets 50, a primary gap g and a secondary gap g'.Preferably the machine includes a rotating motor 72 and wherein the electromagnetic field applied by the electromagnetic unlocking member 38' disengages the resilient spring brake lock member 40 from engaging the interior core member 36 and provides for rotation of the rotating motor 72, and the resilient spring brake lock member 40 engages the interior core member 36 when the rotating motor 72 is not rotating. Preferably the machine includes a motor 72 wherein the electromagnetic field applied by the electromagnetic unlocking member 38' disengages the resilient spring brake lock member 40 from engaging the interior core member 36 and provides for movement of the motor 72 when energized, and the resilient spring brake lock member 40 engaging the interior core member 36 when the motor 72 is not energized.

In an embodiment the invention includes an electromagnetic brake 30, the brake having a static torque rating (T) and a weight (W). The electromagnetic brake including an interior curved core member 36, the interior core member 36 having an exterior curved surface 37, preferably with a friction material, preferably a bonded elastomeric friction material. The electromagnetic brake includes an exterior member 38, the exterior member 38 encircling and housing the interior core member 36. The electromagnetic brake 30 including an encircling resilient brake lock member 40, the resilient brake lock member 40 between the interior core member exterior curved surface 37 and the exterior member 38 , the resilient brake lock member 40 engaging the interior core member exterior curved surface 37 with the resilient brake lock member 40 inhibiting rotation between the exterior member 38 and the interior curved core member 36, wherein a power to unlock applied electromagnetic field (EMF dotted flux lines with arrows) disengages the resilient brake lock member 40 from engaging the interior core member exterior curved surface 37 and allows for the rotation between the exterior member 38 and the interior core member 36 , and wherein the resilient brake lock member 40 engages the interior core member exterior curved surface 37 to provide a static torque rating T in the range from 0.1 to 1,000Nm with the brake 30 having a torque/weight ratio (T/W) greater than 50 Nm/kg.

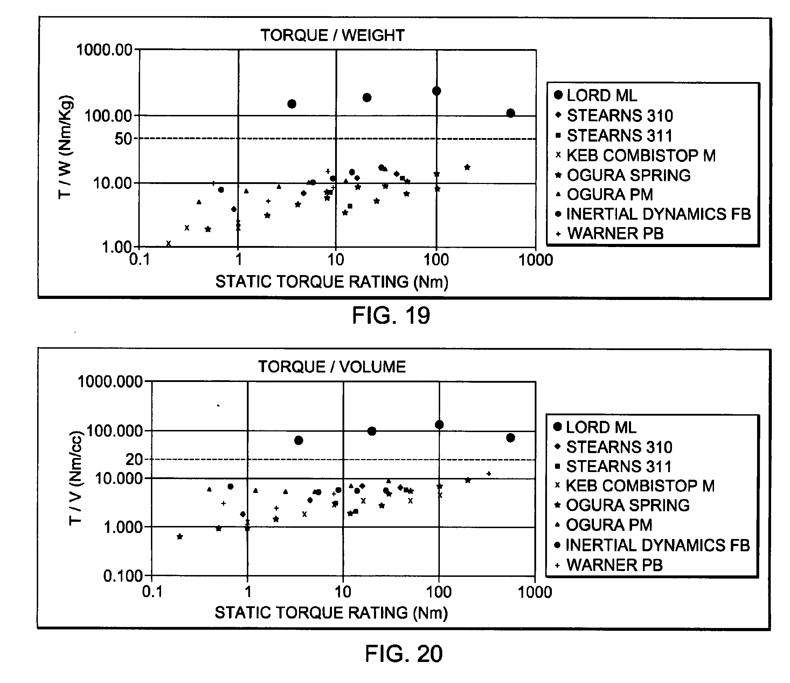

Preferably the resilient brake lock member 40 has a spring brake torque stiffness and the brake 30 provides an unpowered rotation inhibiting brake force static torque rating, the unpowered rotation inhibiting brake force static torque rating dependent on the brake torque stiffness. FIG. 19 is a plot of T/W (Nm/Kg) vs. Static Torque Rating (Nm) showing that modeled data points depicted by the large blue circles (LORD ML) in accordance with embodiments of the invention provide torque/weight ratio (T/W) greater than 50 Nm/kg, and illustrate the difference between such and the commercially available state of the art brakes shown (Steams 310 small blue diamond; Steams 311 small purple square;KEB Combistop M small blue x; Ogura Spring small purple x with vertical center line; Ogura PM small yellow triangle;Inertial Dynamics FB small brown circle; Warner PB small blue +). FIG. 19 compares the torque/weight ratio (T/W) of embodiments of the invention as modeled compared with the torque/weight ratio (T/W) of competitive brakes commercially available brakes, and clearly shows the torque/weight ratio (T/W) greater than 50 Nm/kg for the brakes in the static torque rating range of 0.1 to 1,000Nm. Preferably the resilient brake lock member 40 has a spring brake torque stiffness and the brake 30 provides an unpowered rotation inhibiting brake force static torque rating, the unpowered rotation inhibiting brake force static torque rating dependent on the brake torque stiffness to provide a static torque rating T in the range from 0.1 to 1,000Nm with the brake 30 having a torque/weight ratio (T/W) greater than 75 Nm/kg, preferably greater than 91 Nm/kg, preferably at least 100 Nm/kg.

In an embodiment the invention includes an electromagnetic brake 30, the brake having a static torque rating (T) and a volume (V). The electromagnetic brake 30 includes an interior curved core member 36, the interior core member 36 having an exterior curved surface 37, preferably with a friction material, preferably a bonded elastomeric friction material. The electromagnetic brake 30 includes an exterior member 38, the exterior member 38 encircling the interior core member 36, an encircling resilient brake lock member 40, the resilient brake lock member 40 between the interior core member exterior curved surface 37 and the exterior member 38. The resilient brake lock member 40 engaging the interior core member exterior curved surface 37 with the resilient brake lock member 40 inhibiting rotation between the exterior member 38 and the interior curved core member 36, wherein a power to unlock applied magnetic field (EMF dotted flux lines with arrows) disengages the resilient brake lock member 40 from engaging the interior core member exterior curved surface 37 and allows for rotation between the exterior member 38 and the interior core member 36, and wherein the resilient brake lock member 40 engages the interior core member exterior curved surface 37 with a static torque rating T is in the range from 0.1 to 1,000Nm and the brake volume V is small such that the brake has a torque/volume ratio (T/V) greater than 20 Nm/cc. Preferably the resilient brake lock member 40 has a spring brake torque stiffness and the brake 30 provides an unpowered rotation inhibiting brake force static torque rating, the unpowered rotation inhibiting brake force static torque rating dependent on the brake torque stiffness. FIG. 20 is a plot of T/V (Nm/cc) vs. Static Torque Rating (Nm) showing that modeled data points depicted by the large blue circles (LORD ML) in accordance with embodiments of the invention provide torque/volume ratio (T/V) greater than 20 Nm/cc , and illustrate the difference between such and the commercially available state of the art brakes shown (Steams 310 small blue diamond; Steams 311 small purple square;KEB Combistop M small blue x; Ogura Spring small purple x with vertical center line; Ogura PM small yellow triangle;Inertial Dynamics FB small brown circle; Warner PB small blue +). FIG. 20 compares the torque/volume ratio (TN) of embodiments of the invention as modeled compared with the torque/volume ratio (T/V) of competitive brakes commercially available brakes, and clearly shows the torque/volume ratio (T/V) greater than 20 Nm/cc for the brakes in the static torque rating range of 0.1 to 1,000Nm. Preferably the resilient brake lock member 40 has a spring brake torque stiffness and the brake 30 provides an unpowered rotation inhibiting brake force static torque rating, the unpowered rotation inhibiting brake force static torque rating dependent on the brake torque stiffness to provide a static torque rating T in the range from 0.1 to 1,000Nm with the brake 30 having a torque/volume ratio (T/V) greater than 25 Nm/cc, preferably greater than 31 Nm/cc, preferably at least 57 Nm/cc.

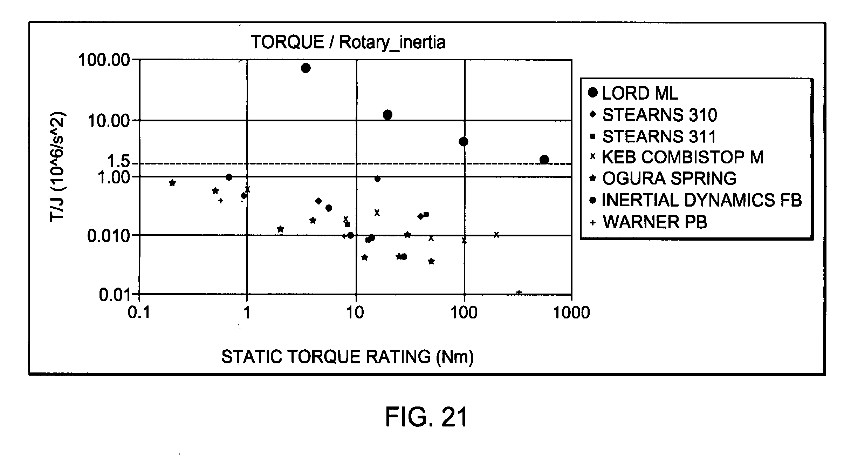

In an embodiment the invention includes an electromagnetic brake 30, the brake having a static torque rating (T) and a rotary interia (J). The electromagnetic brake 30 including an interior curved core member 36, the interior core member having an exterior curved surface 37, an exterior member 38, the exterior member encircling the interior core member 36, an encircling resilient brake lock member 40 , the resilient brake lock member 40 between the interior core member exterior curved surface 37 and the exterior member 38, the resilient brake lock member 40 engaging the interior core member exterior curved surface 37 with the resilient brake lock member 40 inhibiting rotation between the exterior member 38 and the interior curved core member 36, wherein a power to unlock applied magnetic field (EMF dotted flux lines with arrows) disengages the resilient brake lock member 40 from engaging the interior core member exterior curved surface 37 and allows for rotation between the exterior member 38 and the interior core member 36, and wherein the resilient brake lock member 40 engages the interior core member exterior curved surface 37 and the static torque rating T is in the range from 0.1 to 1,000Nm and the brake has a torque/rotary inertia ratio (T/J) greater than 1.5x10⁶ s⁻². Preferably the interior core member exterior curved surface 37 has a friction material, preferably a bonded elastomeric friction material. Preferably the resilient brake lock member 40 has a spring brake torque stiffness and the brake 30 provides an unpowered rotation inhibiting brake force static torque rating, the unpowered rotation inhibiting brake force static torque rating dependent on the brake torque stiffness. FIG. 21 is a plot of T/J(10⁶ s⁻²) vs. Static Torque Rating (Nm) showing that modeled data points depicted by the large blue circles (LORD ML) in accordance with embodiments of the invention provide torque/rotary inertia ratio greater than 1.5x10⁶ s⁻² , and illustrate the difference between such and the commercially available state of the art brakes shown (Steams 310 small blue diamond; Steams 311 small purple square;KEB Combistop M small blue x; Ogura Spring small purple x with vertical center line;Inertial Dynamics FB small brown circle; Warner PB small blue +). FIG. 21 compares the torque/rotary inertia ratio (T/J) of embodiments of the invention as modeled compared with the torque/rotary inertia ratio (T/J) of competitive brakes commercially available brakes, and clearly shows the torque/rotary inertia ratio (T/J) greater than 1.5x10⁶ s⁻² for the brakes in the static torque rating range of 0.1 to 1,000Nm. Preferably the resilient brake lock member 40 has a spring brake torque stiffness and the brake 30 provides an unpowered rotation inhibiting brake force static torque rating, the unpowered rotation inhibiting brake force static torque rating dependent on the brake torque stiffness to provide a static torque rating T in the range from 1 to 100Nm with the brake 30 having a torque/rotary inertia ratio (T/J) greater than 3x10⁶ s⁻².

In an embodiment the invention includes an electromagnetic brake 30, the brake having a static torque rating and a diameter OD, an interior curved core member 36, the interior core member having an exterior curved surface 37, an exterior member 38, the exterior member 38 encircling the interior core member 36, an encircling resilient brake lock member 40, the resilient brake lock member 40 between the interior core member exterior curved surface 37 and the exterior member 38, the resilient brake lock member 40 engaging the interior core member exterior curved surface 37 with the resilient brake lock member 40 inhibiting rotation between the exterior member 38 and the interior curved core member 36, wherein a power to unlock applied magnetic field (EMF dotted flux lines with arrows) disengages the resilient brake lock member 40 from engaging the interior core member exterior curved surface 37 and allows for the rotation between the exterior member 38 and the interior core member 36, the brake diameter OD no greater than about eleven centimeters (about 4 inches) wherein the resilient brake lock member 40 engages the interior core member exterior curved surface 37 to provide a static torque rating at least 2 Nm. The brake diameter OD is preferably of the brake exterior member 38 and the brake housing that houses the brake electromagnetic and friction brake interface components, with the brake diameter OD not including any radially outward extending mounting flange (such as providing mount bolt holes) beyond such brake exterior member 38 and the brake housing. Preferably the resilient brake lock member 40 has a spring brake torque stiffness and the brake provides an unpowered rotation inhibiting brake force static torque rating, the unpowered rotation inhibiting brake force static torque rating dependent on the brake torque stiffness and the brake diameter is no greater than 5 centimeters (about 2 inches) . Preferably the resilient brake lock member 40 has a spring brake torque stiffness and the brake provides an unpowered rotation inhibiting brake force static torque rating of about 2.7 Nm (2 lb-ft) of torque, the unpowered rotation inhibiting brake force static torque rating dependent on the brake torque stiffness and the brake diameter is no greater than about 25.4 mm (1 in) . Preferably the resilient brake lock member 40 has a spring brake torque stiffness and the brake provides an unpowered rotation inhibiting brake force static torque rating of about 3.5 Nm (2.6 lb-ft) of torque, the unpowered rotation inhibiting brake force static torque rating dependent on the brake torque stiffness and the brake diameter is no greater than about 38.1 mm (1.5 in).

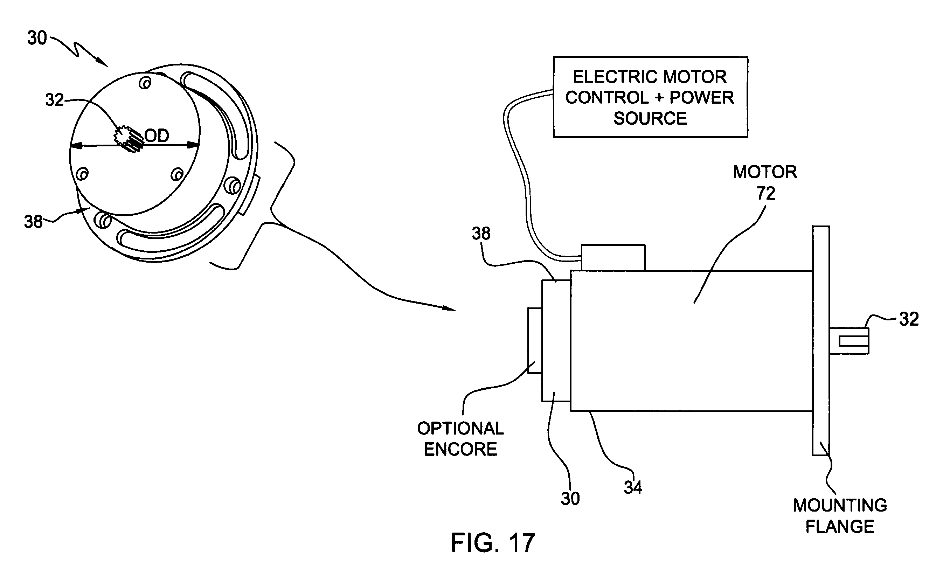

In an embodiment the invention includes a machine. The machine includes a rotating electric motor 72, a first machine motor body 32 and a second machine motor body 34, an interior core member 36, the interior core member 36 coupling with the first machine motor body 32, an outer exterior member 38, the outer exterior member 38 enclosing the interior core member 36, the outer exterior member 38 coupling with the second machine motor body 34, a resilient spring brake lock member 40 having a brake torque stiffness, the resilient spring brake lock member 40 between the interior core member 36 and the outer exterior member 38, the resilient spring brake lock member 40 engaging the interior core member 36 wherein the resilient spring brake lock member 40 inhibits rotation between the outer exterior member 38 and the interior core member 36, and an electromagnetic field (EMF dotted flux lines with arrows) applied by an electromagnetic unlocking member 38' disengages the resilient spring brake lock member 40 from engaging the interior core member 36 and provides for rotation between the outer exterior member 38 and the interior core member 36 and for relative rotating motor motion between the first machine motor body 32 and the second machine motor body 34, the resilient spring brake lock member 40 inhibiting rotation between the outer exterior member 38 and the interior core member 36 and providing a static torque rating greater than 1000 lb-ft for inhibiting relative motion between the first machine motor body 32 and the second machine motor body 34. Preferably the invention provides motor mounted brakes 30 with torque limits greater than 1,000 lb-ft, preferably greater than 1,100 lb-ft, preferably greater than 1,200 lb-ft, preferably greater than 1,500 lb-ft. Preferably the machine electromagnetic unlocking member 38' includes a coil 42. Preferably the machine electromagnetic unlocking member 38' does not require a permanent magnet 50. Preferably the machine includes a rotating motor 72 wherein the electromagnetic field applied by the electromagnetic unlocking member 38' disengages the resilient spring brake lock member 40 from engaging the interior core member 36 and provides for rotation of the rotating motor 72, and the resilient spring brake lock member 40 engages the interior core member 36 when the rotating motor 72 is not rotating. Preferably the machine includes a rotating motor 72 wherein the electromagnetic field applied by the electromagnetic unlocking member 38' disengages the resilient spring brake lock member 40 from engaging the interior core member 36 and provides for movement of the motor 72 when energized, and the resilient spring brake lock member 40 engaging the interior core member 36 when the motor 72 is not energized. As shown in FIG. 17 motor mounted brake 30 preferably couples a rotating shaft first machine motor body 32 of the motor 72 with the interior core member 36 and couples a relative stationary second machine motor body 34 of the motor 72, such as the motor housing, to the outer exterior member 38 to provide an integrated motor and brake machine, preferably with the brake locking the motor in position when the motor is at rest, and preferably with the brake only receiving power when the motor is operating and the shaft is commanded to rotate relative to the motor housing. Such motor mounted brakes are preferably disposed at the robotic arm joints of robot 74, preferably with a rotating shaft first machine motor body 32 coupled with a first robot body arm side of the joint and the opposite second robot body side of the joint coupled with the outer exterior member motor housing 38.

It will be apparent to those skilled in the art that various modifications and variations can be made to the invention without departing from the scope of the invention. Thus, it is intended that the invention cover the modifications and variations of this invention provided they come within the scope of the appended claims and their equivalents. It is intended that the scope of differing terms or phrases in the claims may be fulfilled by the same or different structure(s) or step(s).

## Claims

1. A brake system for controlling rotation between a first body (32) and a second body (34), said brake system comprising:
an interior core member (36), said interior core member (36) coupling with said first body (32), an outer exterior electromagnetic unlocking member (38), said outer exterior electromagnetic unlocking member (38) enclosing said interior core member (36), said outer exterior electromagnetic unlocking member (38) coupling with said second body (34), a resilient spring brake lock member (40) having a brake torque stiffness, said resilient spring brake lock member (40) between said interior core member (36) and said outer exterior electromagnetic unlocking member (38), said resilient spring brake lock member (40) engaging said interior core member (36) wherein said resilient spring brake lock member (40) inhibits rotation between said outer exterior electromagnetic unlocking member (38) and said interior core member (36), and **characterized in that** an attractive electromagnetic field applied by said outer exterior electromagnetic unlocking member (38) disengages said resilient spring brake lock member (40) from engaging said interior core member (36) and provides for rotation between said outer exterior electromagnetic unlocking member (38) and said interior core member (36).

2. A brake system as claimed in claim 1, said brake system providing an unpowered rotation inhibiting brake force, said unpowered rotation inhibiting brake force dependent on said brake torque stiffness.

3. A brake system as claimed in claim 1, said outer exterior electromagnetic unlocking member (38) including an electromagnetic coil (42), and said brake system includes a current source (44), said current source (44) supplying a current having a current level and a current direction to said electromagnetic coil (42) to generate said attractive electromagnetic field.

4. A brake system as claimed in claim 3, wherein said brake system current source (44) supplies an opposing direction current to said electromagnetic coil (42), said opposing direction current having an opposite current direction, with said electromagnetic coil (42) generating a repelling electromagnetic field to re-engage said resilient spring brake lock member (40) with said interior core member (36).

5. A brake system as claimed in claim 1, wherein said resilient spring brake lock member (40) is comprised of a metallic band.

6. A brake system as claimed in claim 1, wherein said resilient spring brake lock member (40) has a magnetic memory.

7. A brake system as claimed in claim 3, said outer exterior electromagnetic unlocking member (38) including an electromagnetic coil yoke member (46), said electromagnetic coil yoke member (46) comprised of a metal with a magnetic hysteresis.

## Patentansprüche

1. Ein Bremssystem zum Steuern von Drehung zwischen einem ersten Körper (32) und einem zweiten Körper (34), wobei das Bremssystem Folgendes beinhaltet:
ein inneres Kernelement (36), wobei das innere Kernelement (36) mit dem ersten Körper (32) gekoppelt ist, ein äußeres externes elektromagnetisches Löseelement (38), wobei das äußere externe elektromagnetische Löseelement (38) das innere Kernelement (36) umgibt, wobei das äußere externe elektromagnetische Löseelement (38) mit dem zweiten Körper (34) gekoppelt ist, ein elastisches Federbremsfeststellelement (40) mit einer Bremsmomentsteifigkeit, wobei das elastische Federbremsfeststellelement (40) zwischen dem inneren Kernelement (36) und dem äußeren externen elektromagnetischen Löseelement (38) liegt, wobei das elastische Federbremsfeststellelement (40) mit dem inneren Kernelement (36) in Eingriff kommt, wobei das elastische Federbremsfeststellelement (40) Drehung zwischen dem äußeren externen elektromagnetischen Löseelement (38) und dem inneren Kernelement (36) hemmt, und **dadurch gekennzeichnet ist, dass** ein durch das äußere externe elektromagnetische Löseelement (38) angelegtes anziehendes elektromagnetisches Feld das elastische Federbremsfeststellelement (40) vom Eingriff mit dem inneren Kernelement (36) befreit und Drehung zwischen dem äußeren externen elektromagnetischen Löseelement (38) und dem inneren Kernelement (36) ermöglicht.

2. Bremssystem gemäß Anspruch 1, wobei das Bremssystem eine antriebslose Drehungshemmbremskraft bereitstellt, wobei die antriebslose Drehungshemmbremskraft von der Bremsmomentsteifigkeit abhängt.

3. Bremssystem gemäß Anspruch 1, wobei das äußere externe elektromagnetische Löseelement (38) eine elektromagnetische Spule (42) umfasst und das Bremssystem eine Stromquelle (44) umfasst, wobei die Stromquelle (44) einen Strom mit einem Strompegel und einer Stromrichtung an die elektromagnetische Spule (42) liefert, um das anziehende elektromagnetische Feld zu erzeugen.

4. Bremssystem gemäß Anspruch 3, wobei die Bremssystemstromquelle (44) einen Strom entgegengerichteter Richtung an die elektromagnetische Spule (42) liefert, wobei der Strom entgegengerichteter Richtung eine Gegenstromrichtung aufweist, wobei die elektromagnetische Spule (42) ein abstoßendes elektromagnetisches Feld erzeugt, um das elastische Federbremsfeststellelement (40) wieder mit dem inneren Kernelement (36) in Eingriff zu bringen.

5. Bremssystem gemäß Anspruch 1, wobei das elastische Federbremsfeststellelement (40) aus einem Metallband besteht.

6. Bremssystem gemäß Anspruch 1, wobei das elastische Federbremsfeststellelement (40) ein magnetisches Gedächtnis aufweist.

7. Bremssystem gemäß Anspruch 3, wobei das äußere externe elektromagnetische Löseelement (38) ein elektromagnetisches Spulenjochelement (46) umfasst, wobei das elektromagnetische Spulenjochelement (46) aus einem Metall mit einer magnetischen Hysterese besteht.

## Revendications

1. Un système de freinage pour contrôler la rotation entre un premier corps (32) et un deuxième corps (34), ledit système de freinage comprenant :
un élément de coeur intérieur (36), ledit élément de coeur intérieur (36) se couplant audit premier corps (32), un élément de déverrouillage électromagnétique extérieur externe (38), ledit élément de déverrouillage électromagnétique extérieur externe (38) renfermant ledit élément de coeur intérieur (36), ledit élément de déverrouillage électromagnétique extérieur externe (38) se couplant audit deuxième corps (34), un élément de verrou de frein à ressort résilient (40) ayant une raideur de couple de freinage, ledit élément de verrou de frein à ressort résilient (40) se trouvant entre ledit élément de coeur intérieur (36) et ledit élément de déverrouillage électromagnétique extérieur externe (38), ledit élément de verrou de frein à ressort résilient (40) se mettant en prise avec ledit élément de coeur intérieur (36), dans lequel ledit élément de verrou de frein à ressort résilient (40) inhibe la rotation entre ledit élément de déverrouillage électromagnétique extérieur externe (38) et ledit élément de coeur intérieur (36), et **caractérisé en ce qu'**un champ électromagnétique attractif appliqué par ledit élément de déverrouillage électromagnétique extérieur externe (38) dégage ledit élément de verrou de frein à ressort résilient (40) de sa prise avec ledit élément de coeur intérieur (36) et permet une rotation entre ledit élément de déverrouillage électromagnétique extérieur externe (38) et ledit élément de coeur intérieur (36).

2. Un système de freinage tel que revendiqué dans la revendication 1, ledit système de freinage fournissant une force de freinage inhibitrice de rotation non sous tension, ladite force de freinage inhibitrice de rotation non sous tension étant fonction de ladite raideur de couple de freinage.

3. Un système de freinage tel que revendiqué dans la revendication 1, ledit élément de déverrouillage électromagnétique extérieur externe (38) comportant une bobine électromagnétique (42), et ledit système de freinage comportant une source de courant (44), ladite source de courant (44) fournissant un courant ayant un niveau de courant et une direction de courant à ladite bobine électromagnétique (42) afin de générer ledit champ électromagnétique attractif.

4. Un système de freinage tel que revendiqué dans la revendication 3, dans lequel ladite source de courant de système de freinage (44) fournit un courant de direction opposée à ladite bobine électromagnétique (42), ledit courant de direction opposée ayant une direction de courant opposée, ladite bobine électromagnétique (42) générant un champ électromagnétique répulsif pour remettre ledit élément de verrou de frein à ressort résilient (40) en prise avec ledit élément de coeur intérieur (36).

5. Un système de freinage tel que revendiqué dans la revendication 1, dans lequel ledit élément de verrou de frein à ressort résilient (40) est composé d'une bande métallique.

6. Un système de freinage tel que revendiqué dans la revendication 1, dans lequel ledit élément de verrou de frein à ressort résilient (40) a une mémoire magnétique.

7. Un système de freinage tel que revendiqué dans la revendication 3, ledit élément de déverrouillage électromagnétique extérieur externe (38) comportant un élément de culasse de bobine électromagnétique (46), ledit élément de culasse de bobine électromagnétique (46) étant composé d'un métal à hystérésis magnétique.
